# EUROPEAN PATENT APPLICATION

(11) **EP 1 126 395 A2**
(43) Date of publication of application: **22.08.2001**
(21) Application number: 01301208.3
(22) Date of filing: 12.02.2001
(51) Int. Cl.: G06F 17/60

(54) **Information processing, commercial message transaction, accounting, and recording media**

(30) Priority: 16.02.2000 JP 2000038810
(71) Applicant: SONY CORPORATION, Tokyo 141 (JP)
(72) Inventor: Seki, Yosuke, Shinagawa-ku, Tokyo 141 (JP)
(74) Representative: Pratt, Richard Wilson

(57) **Abstract**

An information processing apparatus mediates a transaction regarding a Commercial Message CM broadcast between a broadcasting station and a sponsor. A CM frame is registered and laid open, and a tender is accepted from sponsors. When it is discriminated that a tender deadline has come, conditions are counted, and a result of the counting is transmitted. When a sponsor is determined, CM frame acquisition is conveyed and a CM material is received. The CM material is transmitted to the broadcasting station. Then, a CM broadcast is conveyed, and a CM broadcasting charge is calculated and a claim therefor is sent to the sponsor. Then, the processing is ended. However, when a sponsor is not determined, if conditions are reset, then the processing returns to the CM frame laying open processing described above. However, if conditions are not reset, then the processing is ended.

## Description

### BACKGROUND OF THE INVENTION

This invention relates to: an information processing apparatus; an information processing method; a recording medium; a commercial message transaction system; a commercial message transaction method; an accounting system; and an accounting method.

Embodiments of the invention relate to methods and systems by which intermediation for allowing a transaction regarding broadcasting of a commercial message is established between a broadcasting station which broadcasts a commercial message and a sponsor which requests broadcasting of its commercial message through a wide area network such as the Internet.

A television broadcast at present is composed of broadcasting programs produced by a broadcasting station and commercial messages (CM) in a unit of several seconds inserted before and after or intermediately of a broadcasting program. Only common viewers purchase a television receiver and a reception antenna, they can enjoy a television broadcast free of charge in ground wave television broadcasting or the like using them. Since a broadcasting station can acquire various expenses such as equipment investments for production of broadcasting programs and transmission of broadcasting programs and so forth, although it does not collect the reception charge from viewers, administration of the broadcasting station is possible. An advertiser who requests for such broadcasting of a commercial message is commonly called sponsor or client.

In particular, in order to broadcast a broadcasting program, a broadcasting station must acquire a sponsor who provides a commercial message to be inserted into the broadcasting program. To the broadcasting station, acquisition of sponsors is a very significant job for administration of the broadcasting station. The broadcasting station employs a large number of persons in charge of operation for acquisition of valid sponsors. Naturally, an increase of the number of persons in charge of operation increases the operation power.

An advertising agency acts as an intermediator which mediates a broadcasting station and a sponsor. If the advertising agency receives a request for production of a commercial message from the sponsor, then it produces a commercial film regarding a commodity or a service provided by the sponsor or requests a commercial message production company to produce a commercial message. Then, a person in charge of operation of the advertising agency searches for a broadcasting station which may broadcast a commercial message produced in response to the request from the sponsor in conditions such as a time zone expected by the sponsor. Or, a person in charge of operation of the advertising agency receives a request from a broadcasting station and performs operation activities of presenting an outline of a broadcasting program to be broadcast by the broadcasting station in order to search for a sponsor for the broadcasting program.

As a result of such operation activities of persons in charge of operation as described above, if conditions such as a broadcasting time zone, a broadcasting charge and so forth expected by a sponsor and conditions such as a broadcasting time zone, a broadcasting charge and so forth expected by a broadcasting station coincide with each other, then a contract regarding a commercial message is concluded between the sponsor and the broadcasting station.

However, very high personnel expenses are required for persons in charge of operation of a broadcasting station or for persons in charge of operation of an advertising agency. Particularly, a small broadcasting station such as a local station is in a situation wherein its personnel cannot be assigned to such operation activities because the budget for acquisition of advertisements is limited. From such a situation, the broadcasting station side has a requirement to reduce various expenses required for acquisition of sponsors as much as possible.

Meanwhile, in order to determine a broadcasting station from which a commercial message is to be broadcast, the sponsor side must take a very great number of factors into consideration such as a broadcasting hour, the number of broadcasting times, a broadcasting area and whether contents of a broadcasting program to be broadcast when the commercial message is to be broadcast are suitable for the commercial message to be broadcast or for an image of the sponsor. Similarly, also conditions presented from the broadcasting station include fine conditions not only of a broadcasting time zone or an amount of money but also the broadcasting date, the number of broadcasting times, a broadcasting area and so forth. Further, for example, when conditions are presented from a plurality of broadcasting stations, it is not easy to select the most appropriate broadcasting station. Further, if the television broadcasting at present changes to scheduled digital television broadcasting of the next generation, then there is the possibility that more conditions may be presented from a sponsor or a broadcasting station.

In particular, in order to conclude a commercial message broadcasting contract with which both of a broadcasting station and a sponsor are satisfied, for example, a person in charge of operation of an advertising agency visits a plurality of sponsors or a plurality of broadcasting stations many times to negotiate with regard to such conditions, and much expenses and time corresponding to man-hours and labor of persons in charge of operation are spent. As a result, the sponsor and the broadcasting station are obliged to pay much expense to the advertising agency. In other words, a high intermediate cost is required for a transaction regarding broadcasting of a commercial message between the broadcasting station and the sponsor.

Further, a great number of days are required until a commercial message is broadcast actually after a sponsor requests an advertising agency for broadcasting of the commercial message. Where the sponsor wants to start broadcasting a CM as early as possible, for example, when the sponsor requests for broadcasting of a commercial message which requires such urgency as "sales will be performed tomorrow", it is difficult for the advertising agency to rapidly search out and establish a transaction with a broadcasting station which presents various conditions acceptable to the advertising agency.

### SUMMARY OF THE INVENTION

It is an object of the present invention to provide an information processing apparatus and an information processing method as well as a recording medium by which a transaction regarding CM broadcasting between a sponsor and a broadcasting station is realized through a wide area network such as the Internet when conditions for a CM transaction are inputted from the sponsor and the broadcasting station through the network.

In order to attain the object described above, according to an aspect of the present invention, there is provided an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising first reception control means for controlling reception of first information transmitted from any of the first information processing apparatus of the sponsor or sponsors, second reception control means for controlling reception of second information transmitted from any of the second information processing apparatus of the broadcasting station or stations, information production means for producing third information for assistance to a transaction to be performed regarding broadcasting of a commercial message by any of the sponsors and any of the broadcasting stations based on the first information and the second information, and transmission control means for controlling transmission of the third information produced by the information production means through the network.

The information processing apparatus may be constructed such that the first information includes information regarding an expected broadcasting time zone in which the commercial message of the sponsor is to be broadcast while the second information includes an expected broadcasting charge when the broadcasting station broadcasts the commercial message, and the information production means selects the second information having information which coincides with the expected broadcasting time zone and has the lowest expected broadcasting charge and produces the third information based on the selected second information and the transmission control means controls transmission of the third information so that the third information is transmitted to the first information processing apparatus of the sponsor.

Otherwise, the information processing apparatus may be constructed such that the first information includes an expected broadcasting charge when the sponsor requests for broadcasting of a commercial message, and the information production means selects the first information which has the highest expected broadcasting charge and produces the third information based on the selected second information and the transmission control means controls transmission of the third information so that the third information is transmitted to the second information processing apparatus of the broadcasting station.

According to another aspect of the present invention, there is provided an information processing method for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising a first reception control step of controlling reception of first information transmitted from any of the first information processing apparatus of the sponsor or sponsors, a second reception control step of controlling reception of second information transmitted from any of the second information processing apparatus of the broadcasting station or stations, an information production step of producing third information for assistance to a transaction to be performed regarding broadcasting of a commercial message by any of the sponsors and any of the broadcasting stations based on the first information and the second information, and a transmission control step of controlling transmission of the third information produced by the processing of the information production step through the network.

According to a further aspect of the present invention, there is provided a recording medium on which a computer-readable program for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, the program comprising a first reception control step of controlling reception of first information transmitted from any of the first information processing apparatus of the sponsor or sponsors, a second reception control step of controlling reception of second information transmitted from any of the second information processing apparatus of the broadcasting station or stations, an information production step of producing third information for assistance to a transaction to be performed regarding broadcasting of a commercial message by the sponsor and the broadcasting station based on the first information and the second information, and a transmission control step of controlling transmission of the third information produced by the processing of the information production step through the network.

With the information processing apparatus, the information processing method and the program recorded on the recording medium, reception of first information transmitted from a first information processing apparatus of a sponsor is controlled and reception of second information transmitted from a second information processing apparatus of a broadcasting station is controlled. Then, third information for assistance to a transaction to be performed regarding broadcasting of a commercial message between the sponsor and the broadcasting station is produced based on the first information and the second information, and transmission of the produced third information through a network is controlled. Consequently, intermediation of a CM broadcasting transaction which may satisfy expected CM broadcasting conditions of both of the sponsor and the broadcasting station can be achieved.

According to a further aspect of the present invention, there is provided an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising first reception control means for controlling reception of first information transmitted from any of the first information processing apparatus of the sponsor or sponsors and representative of conditions regarding a commercial message, second reception control means for controlling reception of second information transmitted from any of the second information processing apparatus of the broadcasting station or stations and representative of conditions regarding the commercial message, search means for searching for a combination of those of the conditions for a commercial message included in the first information and the second information received under the control of the first reception control means and the second reception control means which coincide with each other, information production means for producing, when a combination of the first information and the second information with which the conditions for the commercial message coincide with each other is searched out, third information regarding the parties of a transaction between which the conditions for the commercial message coincide with each other, and transmission control means for controlling transmission of the third information produced by the information production means through the network.

The information processing apparatus may be constructed such that the first reception control means controls reception of the first information representative of conditions for a commercial message transmitted from the first information processing apparatus of the sponsors, and the second reception control means controls reception of the second information representative of conditions for a commercial message transmitted from the second information processing apparatus of the broadcasting stations.

According to a yet further aspect of the present invention, there is provided an information processing method for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising a first reception control step of controlling reception of first information transmitted from any of the first information processing apparatus of the sponsor or sponsors and representative of conditions regarding the commercial message, a second reception control step of controlling reception of second information transmitted from any of the second information processing apparatus of the broadcasting station or stations and representative of conditions regarding the commercial message, a search step of searching for a combination of those of the conditions for a commercial message included in the first information and the second information received under the control of the processing of the first reception control step and the processing of the second reception control step which coincide with each other, an information production step of producing, when a combination of the first information and the second information with which the conditions for the commercial message coincide with each other is searched out by the processing of the search step, third information regarding the parties of a transaction between which the conditions for the commercial message coincide with each other, and a transmission control step of controlling transmission of the third information produced by the processing of the information production step through the network.

According to a yet further aspect of the present invention, there is provided a recording medium on which a computer-readable program for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, the program comprising a first reception control step of controlling reception of first information transmitted from any of the first information processing apparatus of the sponsor or sponsors and representative of conditions regarding a commercial message, a second reception control step of controlling reception of second information transmitted from any of the second information processing apparatus of the broadcasting station or stations and representative of conditions regarding a commercial message, a search step of searching for a combination of those of the conditions for a commercial message included in the first information and the second information received under the control of the processing of the first reception control step and the processing of the second reception control step which coincide with each other, an information production step of producing, when a combination of the first information and the second information with which the conditions for the commercial message coincide with each other is searched out by the processing of the search step, third information regarding the parties of a transaction between which the conditions for a commercial message coincide with each other, and a transmission control step of controlling transmission of the third information produced by the processing of the information production step through the network.

With the information processing apparatus, the information processing method and the program recorded on the recording medium, reception of first information transmitted from first information processing apparatus of sponsors and representative of conditions for a commercial message is controlled, and reception of second information transmitted from second information processing apparatus of broadcasting stations and representative of conditions for a commercial message is controlled. Then, from among the conditions for a commercial message included in the first information and the second information, a combination of conditions which coincide with each other is searched for. Then, if a combination of the first information and the second information with which the conditions for a commercial coincide with each other is searched out, then third information regarding parties of a transaction with which the conditions for a commercial message coincide with each other is produced, and transmission of the produced third information through a network is controlled. Consequently, intermediation of a CM broadcasting transaction can be achieved when expected CM broadcasting conditions registered individually from a sponsor and a broadcasting station coincide with each other.

According to a yet further aspect of the present invention, there is provided an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising first reception control means for controlling reception of first information transmitted from any of the first information processing apparatus of the sponsor or sponsors, second reception control means for controlling reception of second information transmitted from any of the second information processing apparatus of the broadcasting station or stations, first information production means for producing third information for assistance to a transaction to be performed regarding broadcasting of a commercial message by any of the sponsors and any of the broadcasting stations based on the first information received under the control of the first reception control means, first transmission control means for controlling transmission of the third information produced by the first information production means through the network to the broadcasting station, second information production means for producing fourth information for assistance to a transaction to be performed regarding broadcasting of a commercial message by any of the sponsors and any of the broadcasting stations based on the second information received under the control of the second reception control means, and second transmission control means for controlling transmission of the fourth information produced by the second information production means to the sponsor through the network.

According to a yet further aspect of the present invention, there is provided an information processing method for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising a first reception control step of controlling reception of first information transmitted from any of the first information processing apparatus of the sponsor or sponsors, a second reception control step of controlling reception of second information transmitted from any of the second information processing apparatus of the broadcasting station or stations, a first information production step of producing third information for assistance to a transaction to be performed regarding broadcasting of a commercial message by any of the sponsors and any of the broadcasting stations based on the first information received under the control of the processing of the first reception control step, a first transmission control step of controlling transmission of the third information produced by the processing of the first information production step through the network to the broadcasting station, a second information production step of producing fourth information for assistance to a transaction to be performed regarding broadcasting of a commercial message by any of the sponsors and any of the broadcasting station or stations based on the second information received under the control of the processing of the second reception control step, and a second transmission control step of controlling transmission of the fourth information produced by the processing of the second information production step to the sponsor through the network.

According to a yet further aspect of the present invention, there is provided a recording medium on which a computer-readable program for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, the program comprising a first reception control step of controlling reception of first information transmitted from any of the first information processing apparatus of the sponsor or sponsors, a second reception control step of controlling reception of second information transmitted from any of the second information processing apparatus of the broadcasting station or stations, a first information production step of producing third information for assistance to a transaction to be performed regarding broadcasting of a commercial message by any of the sponsors and any of the broadcasting stations based on the first information received under the control of the processing of the first reception control step, a first transmission control step of controlling transmission of the third information produced by the processing of the first information production step through the network to the broadcasting station, a second information production step of producing fourth information for assistance to a transaction to be performed regarding broadcasting of a commercial message by any of the sponsors and any of the broadcasting station or stations based on the second information received under the control of the processing of the second reception control step, and a second transmission control step of controlling transmission of the fourth information produced by the processing of the second information production step to the sponsor through the network.

With the information processing apparatus, the information processing method and the program recorded on the recording medium, reception of first information transmitted from first information processing apparatus of sponsors is controlled, and reception of second information transmitted from a second information processing apparatus of a broadcasting station is controlled. Then, third information for assistance to a transaction to be performed regarding broadcasting of a commercial message between the sponsors and the broadcasting station is produced based on the first information and the second information, and transmission of the produced third information through a network to the broadcasting station is controlled. Further, fourth information for assistance to a transaction to be performed regarding broadcasting of a commercial message between the sponsors and the broadcasting station is produced based on the second information, and transmission of the fourth information to the sponsors through the network is controlled. Consequently, an appropriate response to expected CM broadcasting conditions registered by each of the sponsors and the broadcasting station can be provided, and intermediation of a CM broadcasting transaction which satisfies the expected CM broadcasting conditions can be achieved.

For a better understanding of the present invention will become apparent from the following illustrative description, taken in conjunction with the accompanying drawings in which like parts or element denoted by like reference symbols.

### BRIEF DESCRIPTION OF THE DRAWINGS

FIG. 1 is a diagrammatic view showing an illustrative CM transaction system to which an embodiment of the present invention is applied;
FIG. 2 is a block diagram showing a construction of a personal computer shown in FIG. 1;
FIG. 3 is a block diagram showing a construction of a computer server shown in FIG. 1;
FIG. 4 is a block diagram showing a construction of an AV server shown in FIG. 1;
FIG. 5 is a diagrammatic view showing a system of a broadcasting station A shown in FIG. 1;
FIG. 6 is a flow chart illustrating a CM registration process of an intermediator;
FIG. 7 is a schematic view illustrating a CM broadcast signaling request entry form;
FIG. 8 is a schematic view illustrating a CM signaling transaction page;
FIG. 9 is a schematic view showing a displaying screen of a tender result;
FIG. 10 is a flow chart illustrating a CM registration process of a sponsor;
FIG. 11 is a flow chart illustrating a CM registration process of a broadcasting station;
FIG. 12 is a flow chart illustrating another CM registration process of an intermediator;
FIG. 13 is a schematic view showing a CM frame table displaying screen;
FIG. 14 is a flow chart illustrating another CM registration process of a broadcasting station;
FIG. 15 is a schematic view showing another CM frame information displaying screen;
FIG. 16 is a flow chart illustrating another CM registration process of a sponsor;
FIG. 17 is a schematic view showing a CM frame search page;
FIG. 18 is a schematic view showing a retrieval result displaying screen;
FIG. 19 is a schematic view showing a further CM frame information displaying screen; and
FIG. 20 is a flow chart illustrating a further CM registration process of an intermediator.

### DESCRIPTION OF THE PREFERRED EMBODIMENTS

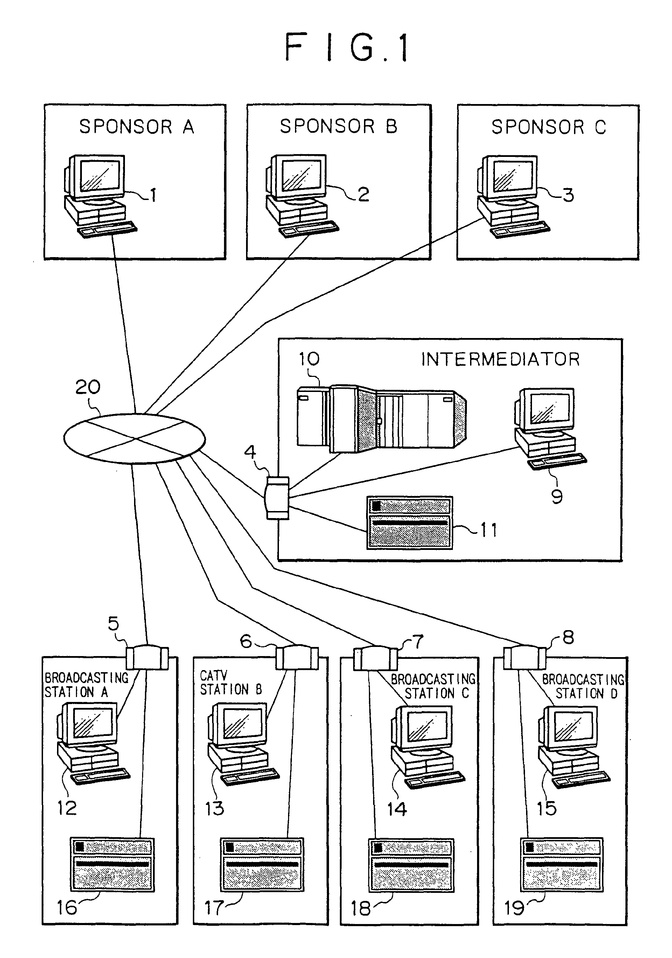

Referring first to FIG. 1, there is shown an illustrative CM transaction system to which an embodiment of the present invention is applied. The CM transaction system shown has a network connection scheme including personal computers 1 to 3 of sponsors A to C, a personal computer 9, a computer server 10 and an AV server 11 of an intermediator, and personal computers 12 to 15 and AV servers 16 to 19 of broadcasting stations A to D.

The personal computers 1 to 3 of the sponsors A to C, a hub 4 of the intermediator, a hub 5 of the broadcasting station A, a hub 6 of the CATV station B, a hub 7 of the broadcasting station C and a hub 8 of the broadcasting station D are connected to one another through a wide area network 20 such as, for example, the Internet.

The hub 4 is connected also to the personal computer 9, computer server 10 and AV server 11 of the intermediator and communicates information with them so that it can communicate information, for example, with the personal computers 1 to 3 through the wide area network 20 or with the personal computers 12 to 15 through the hubs 5 to 8, respectively. Further, the hub 5 is connected also to the personal computer 12 and the AV server 16 of the broadcasting station A and communicates information with them so that it can communicate information, for example, with the personal computers 1 to 3 through the wide area network 20, with the personal computer 9 through the hub 4 or with the personal computers 13 to 15 through the hubs 5 to 8, respectively. Also the hubs 6 to 8 are connected to the personal computers and the AV servers in the respective stations similarly to the hub 5.

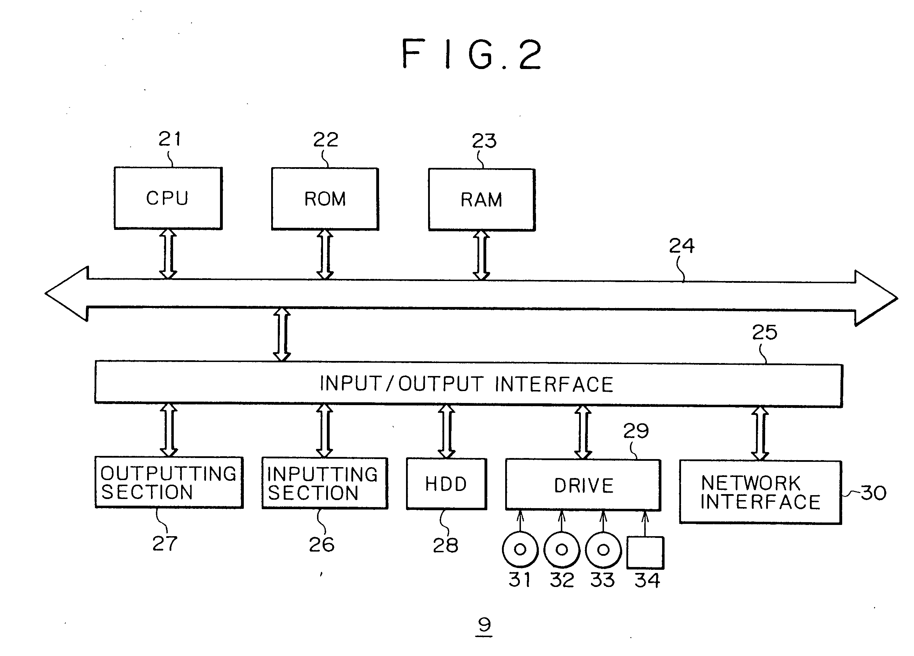

FIG. 2 is a block diagram showing a construction of the personal computer 9 of the intermediator. It is to be noted that the personal computers 1 to 3 and the personal computers 12 to 15 have a similar construction to that of the personal computer 9, and therefore, description of them is omitted herein to avoid redundancy.

Referring to FIG. 2, a CPU (central processing unit) 21 actually executes various application programs and a basic OS (operating system). A ROM (read-only memory) 22 commonly stores a program to be used by the CPU 21 and basically fixed data of parameters for arithmetic operation. A RAM (random-access memory) 23 stores a program used for execution of the CPU 21 and parameters which vary suitably in such execution. The CPU 21, ROM 22, and RAM 23 are connected to each other by an internal bus 24.

The internal bus 24 is connected also to an input/output interface 25. An inputting section 26 is formed from, for example, a keyboard or a mouse and is operated by a user in order to input various instructions to the CPU 21. An outputting section 27 is formed from, for example, a CRT, a speaker or the like and displays various kinds of information in the form of a text, an image or sound. An HDD (hard disk drive) 28 drives hard disks to record or play back a program to be executed by the CPU 21 or information onto or from the hard disks. Onto a drive 29, a magnetic disk 31, an optical disk 32, a magneto-optical disk 33 or a semiconductor memory 34 is loaded when necessary to communicate data with the drive 29. A network interface 30 is connected to the wide area network 20, for example, through a telephone network.

The components 26 to 30 mentioned above are connected to the CPU 21 through the input/output interface 25 and the internal bus 24.

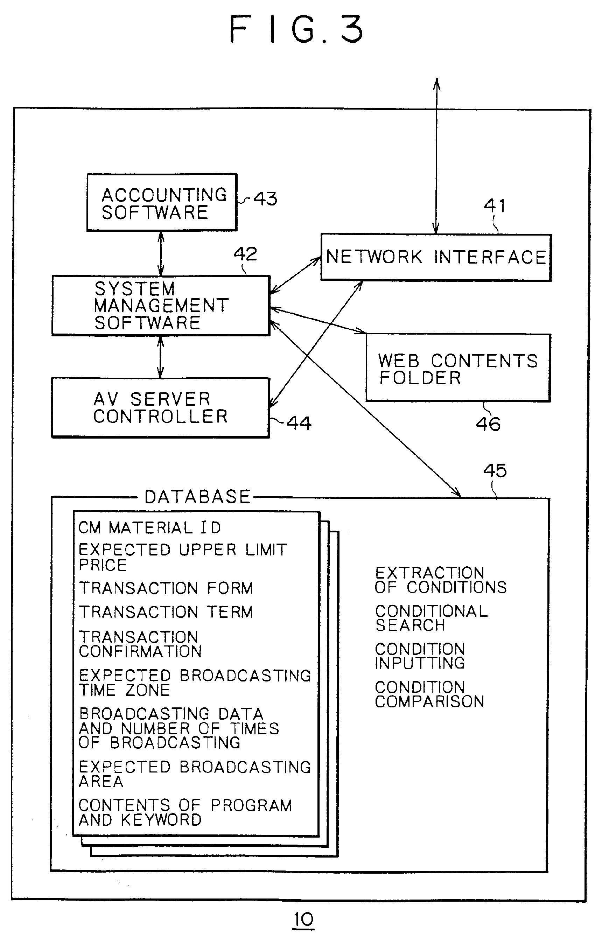

FIG. 3 is a functional block diagram showing a construction of the computer server 10.

Referring to FIG. 3, a network interface 41 supplies a control signal inputted thereto through the hub 4 to system management software 42 or supplies a signal produced by processing of the system management software 42 to the personal computer 9 or the AV server 11 through the hub 4.

The system management software 42 registers information, for example, regarding a CM material inputted thereto into a database 45, starts up accounting software 43 to calculate a CM broadcasting charge based on information representative of a broadcasting charge for a CM, or searches for a predetermined web page from a web contents folder 46 and transmits it to the personal computers 1 to 3 or the personal computers 12 to 15 through the network interface 41, hub 4 and wide area network 20 in accordance with a control signal inputted thereto through the network interface 41.

The accounting software 43 calculates CM broadcasting charges to be claimed to the sponsors A to C in accordance with a control signal produced by processing of the system management software 42.

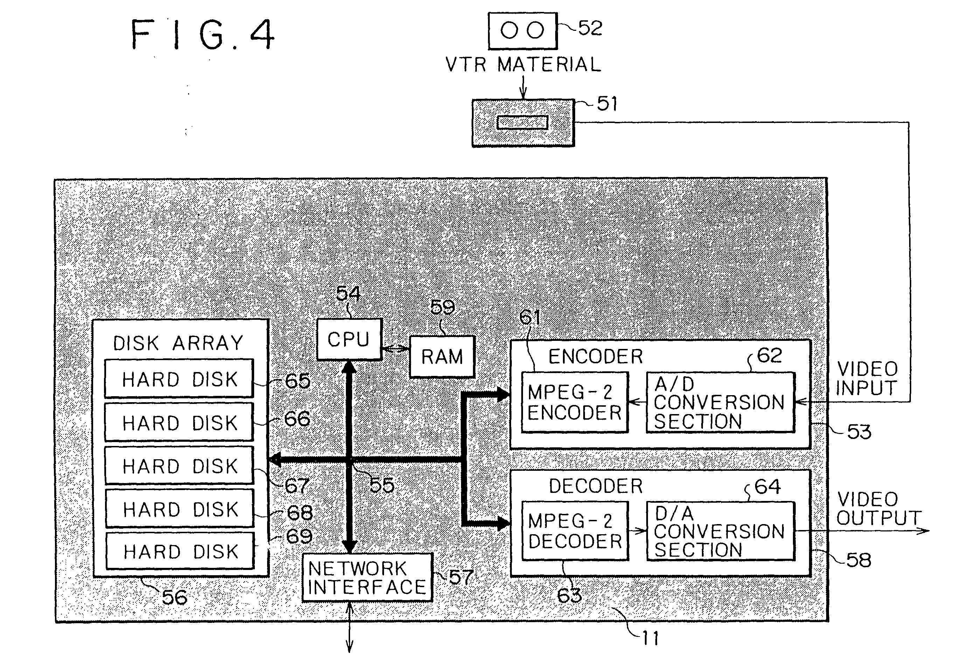

An AV server controller 44 produces a control signal for storing a CM material onto a disk array 56 of the AV server 11, which is hereinafter described with reference to FIG. 4, in accordance with a control signal inputted thereto through the network interface 41 and outputs the control signal to the AV server 11. Further, the AV server controller 44 produces a control signal for searching for a necessary CM material from among CM materials stored on the disk array 56 of the AV server 11 and outputting the CM material and outputs the control signal to the AV server 11.

The database 45 stores information regarding the CM materials stored on the disk array 56 of the AV server 11 in order to extract a condition, search for a condition, register a new condition or compare registered conditions with each other in accordance with a control signal produced by processing of the system management software 42.

The information regarding a CM material stored in the database 45 includes, for example, a CM material ID to be used for searching for a CM material registered on the disk array 56 of the AV server 11, an expected upper limit price to be used as an upper limit to a price when a tender or an auction of a CM broadcasting right is performed, a transaction form for designation of a form of a transaction such as a tender or an auction, a transaction term such as, for example, in the case of a tender, a deadline or, in the case of an auction, a predetermined maximum waiting time until a next presentation is given, transaction confirmation representative of a transaction confirmation method such as, for example, whether an automatic transaction wherein a broadcasting station which has presented the most preferable conditions is automatically selected to establish a transaction is employed or whether a transaction is determined after an expected condition table of broadcasting stations which have presented conditions is referred to, an expected broadcasting time zone representative of an expected time zone in which the CM is to be broadcast, a broadcasting date and number of times of broadcasting representative of an expected day on which the CM is to be broadcast and how many times the CM is to be broadcast on the day, an expected broadcasting area representative of an area in which it is expected to broadcast the CM such as, for example, Kanto, all over Japan, Atsugi-city, Asia or Kanagawa prefecture, a contents of program and keyword for designation of contents of a broadcasting program in which the CM is to be broadcast or for designation of a keyword.

The web contents folder 46 stores produced web contents or outputs predetermined web contents from among stored web contents in accordance with a control signal produced by processing of the system management software 42.

FIG. 4 is a block diagram showing a construction of the AV server 11. It is to be noted that the AV servers 16 to 19 of the broadcasting stations A to D have a construction similar to that of the AV server 11 except that information recorded on hard disks 65 to 69 of the disk array 56 includes not only CM materials but also broadcasting program materials to be broadcast. Therefore, overlapping description of them is omitted herein to avoid redundancy.

Referring to FIG. 4, an encoder 53 receives an input of a CM material recorded on a video tape 52 loaded in a VTR (Video Tape Recorder) 51, converts the CM material into digital data by means of an A/D (Analog/Digital) conversion section 62, encodes the digital data by means of an MPEG-2 (Moving Picture Coding Experts Group/Moving Picture Experts Group-2) encoder 61 and outputs the encoded data.

A CPU 54 outputs a CM material digitized and encoded by the encoder 53 or a CM material inputted from a network interface 57 to the disk array 56 over an internal bus 55. Further, the CPU 54 searches for a CM material recorded on one of the hard disks 65 to 69 of the disk array 56 in accordance with a control signal inputted thereto through the network interface 57 and the internal bus 55 and outputs the searched out CM material through the internal bus 55 and the network interface 57 or to a decoder 58 over the internal bus 55.

The decoder 58 decodes a CM material inputted over the internal bus 55 by means of an MPEG-2 decoder 63, converts the decoded CM material into analog data by a D/A (digital/analog) conversion section 64 and outputs the analog data.

The disk array 56 is formed from hard disks 65 to 69 and stores a CM material inputted thereto onto the hard disks 65 to 69, searches for a predetermined CM material in accordance with a control signal inputted thereto from the CPU 54 through the internal bus 55 and outputs the searched out CM material.

The network interface 57 is connected to the hub 4 and communicates information with the personal computer 9, computer server 10 and so forth. A RAM 59 stores a program to be used by the CPU 54 and parameters which suitably vary in execution of the program.

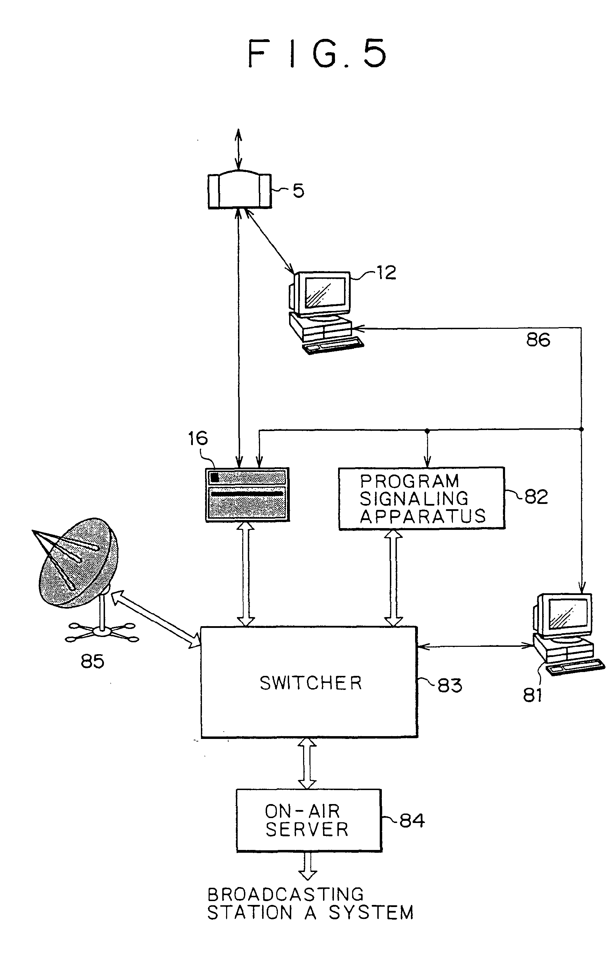

Subsequently, a broadcasting system of the broadcasting station A is described with reference to FIG. 5.

The AV server 16 stores program materials to be broadcast. The AV server 16 further stores a CM material transmitted thereto from the AV server 11 of the intermediator through the hub 4, wide area network 20 and hub 5. The AV server 16 supplies a program material or a CM material stored therein to a switcher 83 in accordance with a control signal inputted thereto from a personal computer 81 through a local network 86.

The personal computer 12 produces a signal representing that a CM material inputted to the personal computer 12 through the hub 5 is inputted to and stored into the AV server 16 and outputs the signal to the personal computer 81 through the local network 86.

The personal computer 81 produces control signals for controlling operation of the AV server 16, a broadcasting program signaling apparatus 82 and the switcher 83 connected thereto through the local network 86 and outputs the control signals to the AV server 16, broadcasting program signaling apparatus 82 and switcher 83 through the local network 86.

The broadcasting program signaling apparatus 82 is, for example, a VTR or the like and supplies a predetermined broadcasting program material to the switcher 83 in accordance with a control signal inputted thereto from the personal computer 81. The switcher 83 suitably switches a program material or a CM material supplied thereto in accordance with a control signal inputted thereto from the personal computer 81 so that it is broadcast over a wired network or broadcast by radio through an antenna 85.

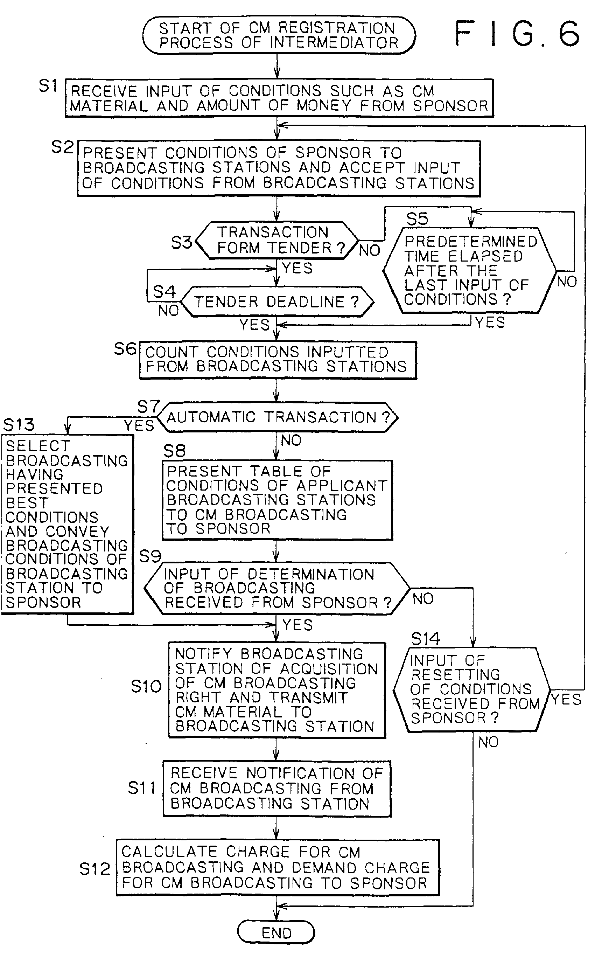

Subsequently, a CM registration process executed by the personal computer 9, computer server 10 and AV server 11 of the intermediator is described with reference to a flow chart of FIG. 6.

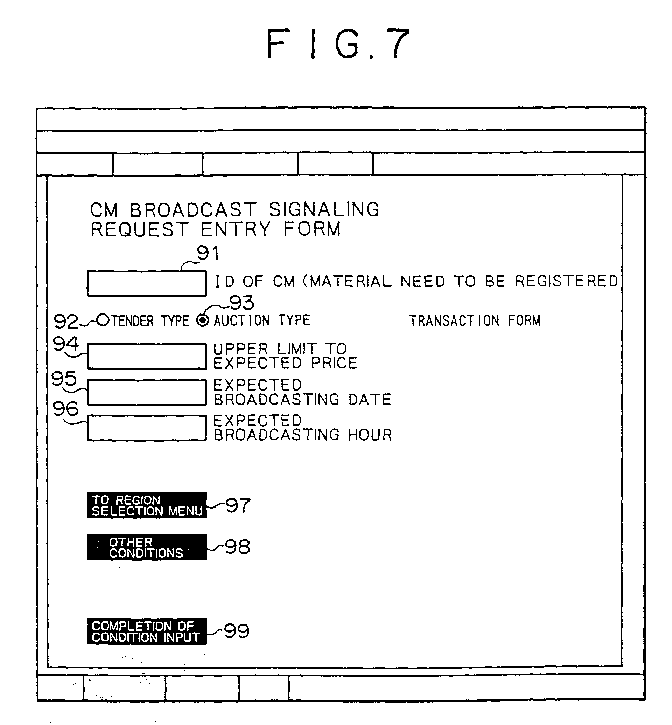

In step S1, the system management software 42 of the computer server 10 receives a signal representative of a CM material and conditions such as an amount of money inputted in accordance with a CM broadcasting signaling request entry form of FIG. 7 from any of the personal computers 1 to 3 of the sponsors A to C through the wide area network 20, hub 4 and network interface 41. In particular, the computer server 10 of the intermediator has stored in the web contents folder 46 thereof in advance web contents for causing the CM broadcasting signaling request entry form shown in FIG. 7 to be displayed, and the system management software 42 has the CM broadcasting signaling request entry form laid open to the wide area network 20 so that any of the sponsors A to C can access the computer server 10 to refer arbitrarily to the CM broadcasting signaling request entry form.

The system management software 42 of the computer server 10 outputs the signal representative of expected broadcasting conditions inputted thereto to the personal computer 9 through the hub 4 and produces and outputs a control signal for causing the CM material to be stored onto the disk array 56 of the AV server 11 to the AV server controller 44 so that the conditions regarding CM broadcasting are stored into the database 45. The AV server controller 44 controls the AV server 11 to store the CM material onto the disk array 56 in accordance with the control signal inputted thereto. Here, the description proceeds on the supposition that a CM broadcasting signaling request is received from the sponsor A.

The CM broadcasting signaling request entry form of FIG. 7 has prepared thereon a text box 91 for inputting an ID of a CM material registered in advance in the AV server 11 of the intermediator, a pair of check boxes 92 and 93 for selecting a transaction form from between a tender type and an auction type, a text box 94 for entering an upper limit to a CM broadcasting charge, a text box 95 for entering an expected broadcasting time (expected broadcasting date), a text box 96 for entering an expected broadcasting hour, a button 97 for moving to a page on which an area selection menu is displayed, a button 98 for moving to a setting page for setting some other conditions such as, for example, selection of whether or not an automatic transaction should be performed, and a button 99 for causing, when inputting of conditions is completed, the inputted conditions to be transmitted to the personal computer 9 of the intermediator.

For example, where the transaction form is a tender, the broadcasting stations A to D submit conditions for CM broadcasting such as an amount of money before a deadline of a term. The sponsor A concludes a contract for CM broadcasting with that one of the broadcasting stations which presents the most preferable conditions. On the other hand, where the transaction form is an auction, the broadcasting stations A to D refer to conditions presented successively by them to present CM broadcasting conditions of themselves. Then, if some other conditions are not presented by the broadcasting stations A to D even when a predetermined time elapses after a time at which the last conditions are presented from any of the broadcasting stations A to D, the auction comes to an end. Then, the sponsor A concludes a contract for CM broadcasting with that one of the broadcasting stations which has exhibited the most preferable conditions.

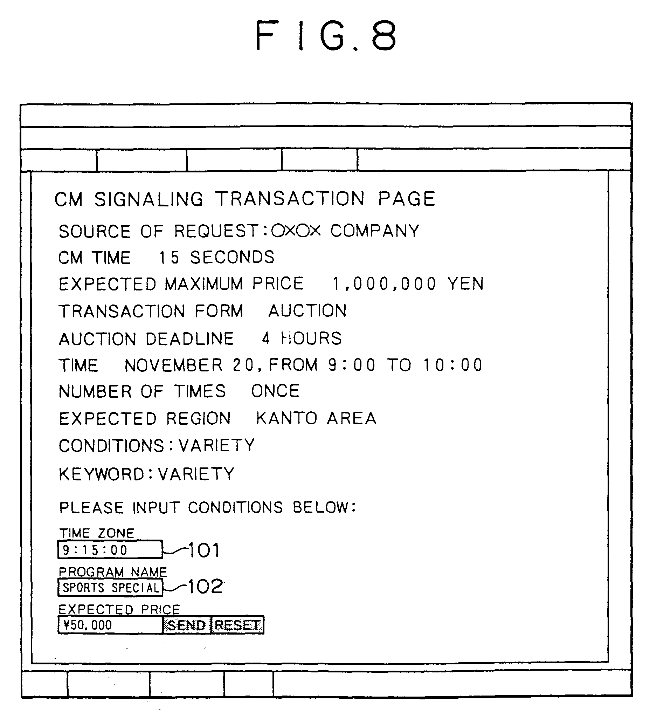

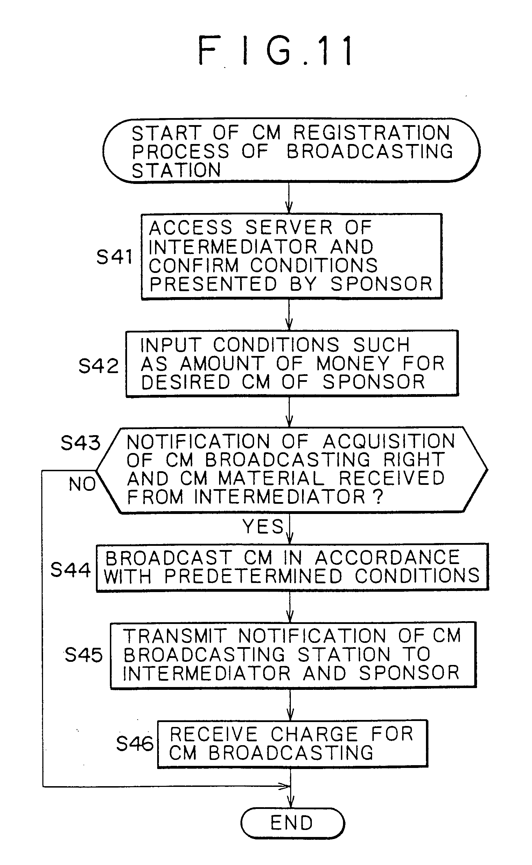

In step S2, the CPU 21 produces a CM signaling transaction page such as, for example, shown in FIG. 8 based on the conditions of the sponsor A inputted in step S1. Then, the CPU 21 supplies data corresponding to the produced page to the computer server 10 through the internal bus 24, the input/output interface 25, network interface 30 and hub 4. The system management software 42 of the computer server 10 stores the data corresponding to the CM signaling transaction page inputted thereto through the network interface 41 into the web contents folder 46 and lays open the data corresponding to the CM signaling transaction page to the wide area network 20 so that the broadcasting stations A to D can refer to the CM signaling transaction page arbitrarily by accessing the computer server 10. Then, the network interface 30 receives signals corresponding to broadcasting conditions for a CM transmitted from the broadcasting stations A to D by processing in step S42 of FIG. 11 which is hereinafter described through the wide area network 20 and the hub 4. The CPU 21 stores the thus inputted broadcasting conditions for a CM onto the HDD 28.

On the CM signaling transaction page of FIG. 8, the conditions for CM broadcasting for a sponsor inputted from the sponsor A in step S1 are displayed. Further, a text box 101 for inputting a time zone in which the corresponding CM is to be broadcast by a user of any of the personal computers 12 to 15 of the broadcasting stations A to D, a text box 102 for inputting a broadcasting program name in which the CM is to be broadcast, a text box 103 for inputting an expected price for a broadcasting charge of the CM, a transmission button 104 for transmitting contents inputted to the text boxes 101 to 103 to the personal computer 9 of the intermediator, and a reset button 105 for resetting the contents inputted to the text boxes 101 to 103 upon resetting, are prepared on the CM signaling transaction page of FIG. 8.

In step S3, the CPU 21 discriminates whether or not the transaction form is a tender (that is, whether the transaction form is a tender or an auction) from the conditions inputted in step S1.

When it is discriminated in step S3 that the transaction form is a tender, the CPU 21 discriminates whether or not a tender deadline has come. If it is discriminated in step S4 that the tender deadline has not come, then the processing in step S4 is repeated until it is discriminated that the tender deadline has come.

If it is discriminated in step S3 that the transaction form is not a tender, then since the transaction form is an auction, the CPU 21 discriminates in step S5 whether or not a predetermined time elapses after conditions for a transaction are inputted lastly from one of the personal computers 12 to 15 of the broadcasting stations A to D. If it is discriminated in step S5 that the predetermined time does not elapse, then the processing in step S5 is repeated until it is discriminated that the predetermined time elapses.

If it is discriminated in step S4 that the tender deadline has come or if it is discriminated in step S5 that the predetermined time elapses, then the CPU 21 reads out, in step S6, the expected conditions for a transaction presented by the broadcasting stations A to D and stored on the HDD 28 by the processing in step S2 through the input/output interface 25 and the internal bus 24 and counts the read out expected conditions.

In step S7, the CPU 21 discriminates based on the conditions of the sponsors inputted by the processing in step S1 whether or not the transaction is an automatic transaction. Here, the automatic transaction is such setting that, using, for example, the broadcasting money amount as a key, a transaction is performed automatically with a broadcasting station which has presented the most preferable conditions.

If it is discriminated in step S7 that the transaction is an automatic transaction, then the CPU 21 selects, in step S13, a broadcasting station which has presented the most preferable conditions (for example, where the broadcasting amount of money is used as a key, the lowest expected amount of money) based on the counting result counted in step S5, and transmits the broadcasting conditions of the broadcasting station to the personal computer 1 of the sponsor A through the internal bus 24, input/output interface 25, network interface 30, hub 4 and wide area network.

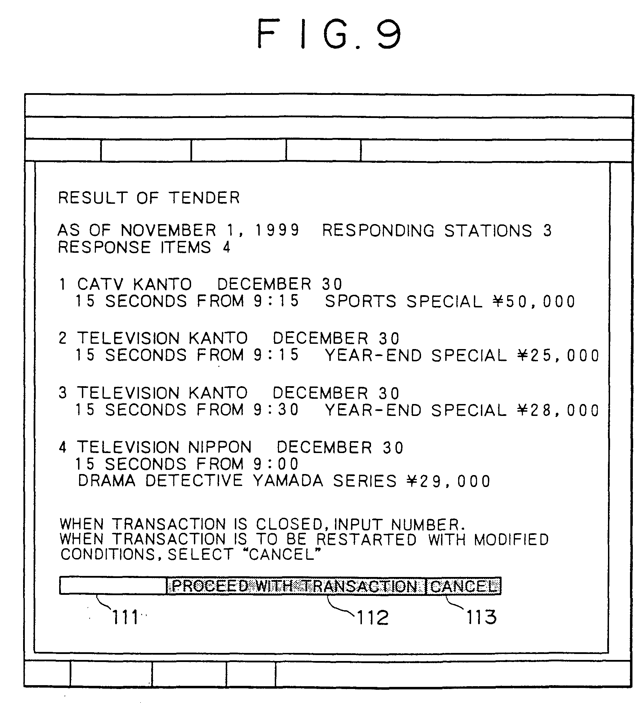

If it is discriminated in step S7 that the transaction is not an automatic transaction, then the CPU 21 indicates, in step S8, for example, a table of the conditions (tender result) of the CM broadcasting expecting broadcasting station based on the expected broadcasting conditions presented by the broadcasting stations A to D and counted in step S5 and, when a transaction is established, data corresponding to web contents illustrated in FIG. 9 and having a text box 111 for inputting a corresponding number, a button 112 for transmitting the inputted number to the personal computer 9 of the intermediator and a button 113 to be selected when transaction conditions are to be reset. Further, the CPU 21 supplies the data to the computer server 10 through the internal bus 24, input/output interface 25, network interface 30 and hub 4. The system management software 42 of the computer server 10 stores the data corresponding to the web contents and inputted through the network interface 41 into the web contents folder 46 and supplies the data to the personal computer 1 of the sponsor A through the network interface 41, hub 4 and wide area network 20.

In step S9, the CPU 21 discriminates whether or not an input of a signal representative of determination of a broadcasting station from which a CM is to be broadcast is received (that is, an input of a signal representing that one of the numbers of 1 to 4 has been inputted to the box 111 shown in FIG. 9 and the button 112 has been selected is received) from the personal computer 1 of the sponsor A which has confirmed the tender result of FIG. 9.

If it is discriminated in step S9 that an input representative of determination of a broadcasting station is received from the sponsor A, or if the processing in step S13 is completed, then the CPU 21 conveys, in step S10, acquisition of a CM broadcasting right to the personal computer 12 of the broadcasting station which has acquired the CM broadcasting right (here, it is assumed that the broadcasting station A has acquired the broadcasting right) through the internal bus 24, input/output interface 25, network interface 30, hub 4, wide area network 20 and hub 5. Further, the CPU 21 outputs a control signal for causing the AV server controller 44 of the computer server 10 to search for a CM material whose broadcasting is requested by the sponsor A from the hard disks 65 to 69 of the disk array 56 of the AV server 11 through the internal bus 24, input/output interface 25, network interface 30, hub 4 and network interface 41 and output the CM material.

The AV server controller 44 outputs a control signal for instructing the CPU 54 of the AV server 11 to search for and output a corresponding CM material to the CPU 54 of the AV server 11 through the network interface 41, hub 4, network interface 57 and internal bus 55. The CPU 54 searches for a corresponding CM material from the hard disks 65 to 69 of the disk array 56 and transmits the CM material to the AV server 16 of the broadcasting station A through the internal bus 55, network interface 57, hub 4, wide area network 20 and hub 5.

In step S11, the CPU 21 receives, at a predetermined timing, an input of a notification (a signal transmitted in step S45 of FIG. 11 which is hereinafter described) representing that broadcasting of the CM has been performed from the personal computer 12 of the broadcasting station A, which has acquired the CM broadcasting right, through the wide area network 20, hub 4, network interface 30, input/output interface 25 and internal bus 24.

In step S12, the CPU 21 outputs information representative of the conditions of the broadcasting charge inputted from the broadcasting station A in step S2 to the computer server 10 through the hub 4. The system management software 42 of the computer server 10 receives an input of the information representative of the conditions of the broadcasting charge through the network interface 41, starts up the accounting software 43 to calculate the broadcasting charge for the CM, transmits a signal for claiming the CM broadcasting charge to the personal computer 1 of the sponsor A through the network interface 41, hub 4 and wide area network 20, and ends its processing. Here, the calculation and the claiming of the CM broadcasting charge may be performed such that, for example, CM broadcasting charges for a predetermined period such as, for example, for each week or each month are calculated and claimed.

If it is discriminated in step S9 that an input of determination of a broadcasting station has not been received from the sponsor (that is, if it is discriminated that the button 113 of FIG. 9 has been selected), then the CPU 21 discriminates, in step S14, whether or not a signal representative of resetting of expected broadcasting conditions is inputted from the personal computer 1 of the sponsor A through the wide area network 20, hub 4, network interface 30, input/output interface 25 and internal bus 24.

If it is discriminated in step S14 that a signal representative of resetting of expected broadcasting conditions have been inputted, then the processing returns to step S2 so that the processing in step S2 et seq. is repeated. If it is discriminated in step S14 that a signal representative of resetting of expected broadcasting conditions is not inputted, then the processing is ended.

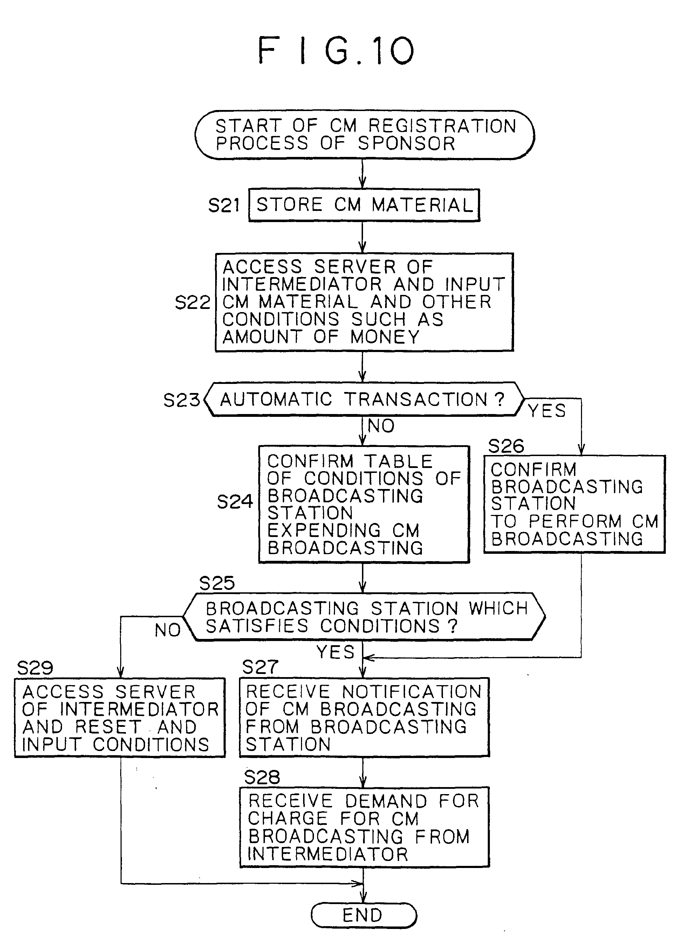

Subsequently, a CM registration process of the sponsor executed in parallel to the process described hereinabove with reference to FIG. 6 is described with reference to a flow chart of FIG. 10. Here, the description proceeds on the supposition that the sponsor A registers broadcasting expectation of a CM.

The sponsor A prepares a CM material for broadcasting produced using a VCR or the like not shown. In step S21, the CPU 21 of the personal computer 1 of the sponsor A (FIG. 2 is referred to as a figure which shows a construction not only of the personal computer 9 but also of the other personal computers) stores the CM material produced by the VCR or the like not shown and inputted thereto through the network interface 30 onto the HDD 28.

In step S22, the CPU 21 accesses the computer server 10 of the intermediator through the wide area network 20 and the hub 4 in accordance with an instruction inputted by the user using the inputting section 26, and registers the CM material stored on the HDD 28 in step S21. Further, the user refers to the page for a CM broadcasting signaling request described with reference to FIG. 7 and laid open to the wide area network 20, and inputs broadcasting conditions such as an amount of money and then selects the button 99. Then, the CPU 21 accesses the computer server 10 of the intermediator through the wide area network 20 and hub 4 in accordance with an instruction inputted by the user using the inputting section 26 and transmits a signal corresponding to the inputted broadcasting conditions to the computer server 10.

In step S23, the CPU 21 discriminates, from the broadcasting conditions inputted in step S22, whether or not an automatic transaction has been set, that is, whether or not it has been set so that transaction is performed automatically with the broadcasting station which has presented the best conditions.

If it is discriminated in step S23 that an automatic transaction has been set, then the network interface 30 receives, in step S26, a signal transmitted from the personal computer 9 of the intermediator through the hub 4 and the wide area network 20 in step S13 of FIG. 6 and representative of the broadcasting station which has exhibited the most preferable conditions and a table of the conditions such as a broadcasting charge. Then, the CPU 21 causes the signal to be supplied to and displayed by the outputting section 27. The user confirms the broadcasting station which has presented the most preferable conditions and the conditions of the broadcasting station such as a broadcasting charge both displayed on the outputting section 27, and the processing advances to step S27.

If it is discriminated in step S23 that an automatic transaction has not been set, then the network interface 30 receives a signal representative of a table of the conditions of the broadcasting stations which expect broadcasting of the CM shown in FIG. 9, transmitted from the personal computer 9 of the intermediator through the hub 4 and the wide area network 20 in step S8 of FIG. 6. The CPU 21 supplies the signal to the outputting section 27 so that it may be displayed. The user confirms the table of the broadcasting stations of FIG. 9, which expect broadcasting of the CM, displayed on the outputting section 27.

In step S25, the CPU 21 receives an input of the signal representative of the contents inputted by the user using the inputting section 26 and discriminates, based on the inputted signal, whether or not a broadcasting station which satisfies the conditions of the user is present, that is, whether or not a number has been entered the text box 111 of FIG. 9 and the button 112 has been selected.

If it is discriminated in step S25 that a broadcasting station which satisfies the conditions is not present, then the CPU 21 accesses, in step S29, the computer server 10 of the intermediator through the internal bus 24, input/output interface 25, network interface 30, wide area network 20 and hub 4 to read the CM broadcasting signaling request entry form described with reference to FIG. 7 again and causes the outputting section 27 to display the CM broadcasting signaling request entry form. Then, the CPU 21 receives an input of a signal corresponding to the broadcasting stations inputted using the inputting section 26 by the user through the input/output interface 25 and the internal bus 24 and transmits the signal corresponding to the broadcasting conditions to the computer server 10 of the intermediator through the internal bus 24, input/output interface 25, network interface 30, wide area network 20 and hub 4. Then, the processing is ended.

If it is discriminated in step S25 that a broadcasting station which satisfies the conditions is present, or if the processing in step S26 comes to an end, then the CPU 54 of the AV server 11 of the intermediator transmits a CM material to the broadcasting station (here it is assumed that this is the broadcasting station A) (step S10 of FIG. 6). Thus, the broadcasting station A broadcasts the CM (step S44 of FIG. 11 which is hereinafter described). Then, in step S27, the CPU 21 receives an input of a notification of CM broadcasting (a signal transmitted in step S45 of FIG. 11 which is hereinafter described) from the personal computer 12 of the broadcasting station A through the hub 5, wide area network 20, network interface 30, input/output interface 25 and internal bus 24.

In step S28, the CPU 21 receives an input of the claim of the CM broadcasting charge (transmitted in step S12 of FIG. 6) from the personal computer 9 of the intermediator through the hub 4, wide area network 20, network interface 30, input/output interface 25 and internal bus 24. Then, the processing is ended.

Subsequently, a CM registration process of a broadcasting station performed in parallel to the processes described hereinabove with reference to FIGS. 6 and 10 is described with reference to a flow chart of FIG. 11. Here, description is given of a case wherein the broadcasting station A registers broadcasting expectation of a CM presented by the sponsor A.

In step S41, the CPU 21 of the personal computer 12 of the broadcasting station A accesses the computer server 10 of the intermediator through the hub 5, wide area network 20 and hub 4 in accordance with an instruction inputted by the user using the inputting section 26 to read out the CM signaling transaction page described hereinabove with reference to FIG. 8 and controls the outputting section 27 to display the CM signaling transaction page. The user who uses the personal computer 12 refers to the CM signaling transaction page of FIG. 8 to confirm the conditions presented by the sponsor A.

In step S42, the user refers to the CM signaling transaction page of FIG. 8 to input broadcasting conditions such as an amount of money to the text boxes 101 to 103 using the inputting section 26. The CPU 21 receives an input of a signal corresponding to the broadcasting conditions inputted to the text boxes 101 to 103 by the user through the input/output interface 25 and the internal bus 24. The CPU 21 further receives an input of a signal indicating that the button 104 is selected by the user using the inputting section 26, and transmits a signal corresponding to the broadcasting conditions inputted to the text boxes 101 to 103 to the computer server 10 of the intermediator through the hub 5, the wide area network 20 and the hub 4.

In step S43, the CPU 21 discriminates based on the signal inputted thereto through the hub 4, wide area network 20, hub 5, network interface 30, input/output interface 25 and internal bus 24 whether or not an acquisition notification of the CM broadcasting right and a CM material transmitted from the computer 9 of the intermediator in step S10 of FIG. 6 have been received. If it is not discriminated in step S43 that such signals have not been received, then the processing is ended.

If it is discriminated in step S43 that an acquisition notification of the CM broadcasting right and a CM material have been received, then the CPU 21 outputs the received CM material to the AV server 16 through the hub 5 in step S44 so that the CM material is stored into the AV server 16. Then, the CPU 21 produces a control signal for causing the CM to be broadcast in accordance with the predetermined conditions and transmits the control signal to the personal computer 81 described hereinabove with reference to FIG. 5 through the local network 86. The personal computer 81 controls the AV server 16, broadcasting program signaling apparatus 82 and switcher 83 in accordance with the received control signal so that the CM may be broadcast in accordance with the predetermined conditions. After the CM is broadcast, the personal computer 81 transmits a signal for notification of completion of the CM broadcast to the personal computer 12 through the local network 86.

In step S45, the CPU 21 of the personal computer 12 transmits the notification of the CM broadcast to the personal computer 9 of the intermediator and the personal computer 1 of the sponsor A through the hub 5 and the wide area network 20.

In step S46, the broadcasting station A receives a CM broadcasting charge for the CM broadcasting performed in step S44, and then the processing is ended.

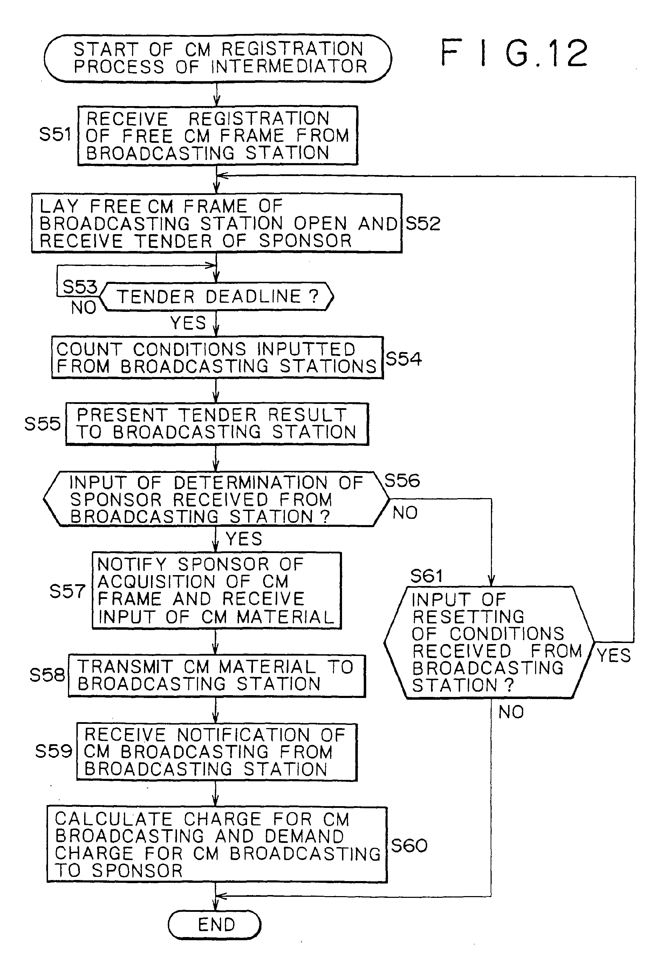

In the processes described above with reference to FIGS. 6 to 11, broadcasting conditions for a CM are presented from the sponsor A first, and then the conditions are presented to the broadcasting stations A to D by the intermediator. Then, the broadcasting stations A to D which confirmed the presented conditions present expected broadcasting conditions beginning with a charge for CM broadcasting, and a broadcasting station which is to broadcast a CM is determined based on the expected broadcasting conditions. In contrast, it is otherwise possible, for example, that the broadcasting station side presents a free CM frame and a sponsor or sponsors present broadcasting conditions for a CM for the presented CM frame to perform a transaction of CM broadcasting. A CM registration process of the intermediator in this instance is described with reference to a flow chart of FIG. 12.

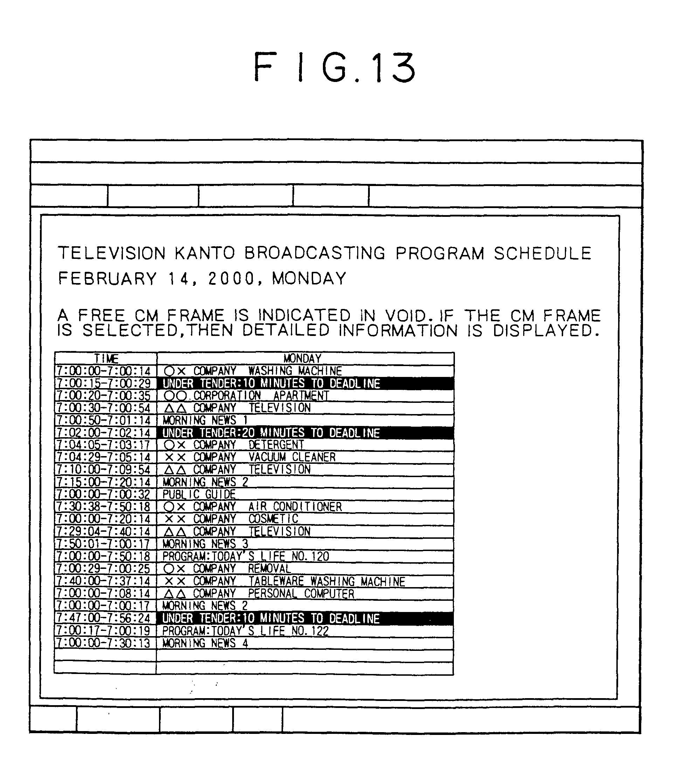

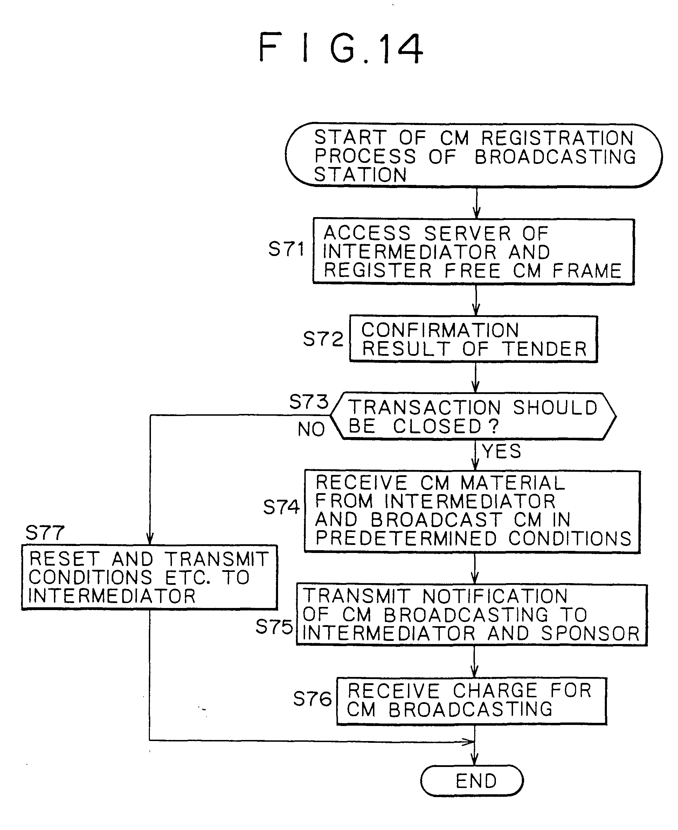

In step S51, the CPU 21 of the personal computer 9 of the intermediator receives an input of a signal representative of a free CM frame transmitted in step S71 of FIG. 14, which is hereinafter described, for example, from the personal computer 12 of the broadcasting station A through the hub 5, wide area network 20, hub 4, network interface 30, input/output interface 25 and internal bus 24, produces such web contents which display a CM frame table of the broadcasting station A as shown in FIG. 13, and transmits the web contents to the computer server 10 through the internal bus 24, input/output interface 25, network interface 30 and hub 4. The system management software 42 of the computer server 10 stores the web contents inputted through the network interface 41 into the web contents folder 46.

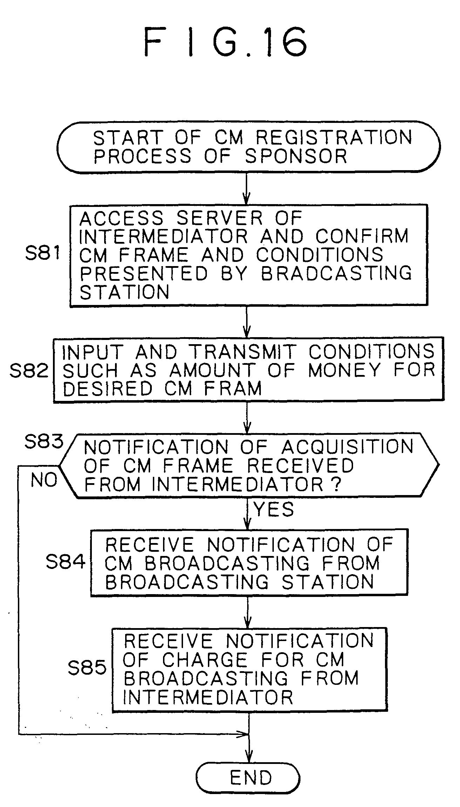

In step S52, the system management software 42 lays open the web contents of FIG. 13 stored in the web contents folder 46 in step S51 on the wide area network 20 through the hub 4. The personal computers 1 to 3 of the sponsors A to C refer, in step S81 of FIG. 16 which is hereinafter described, to the web contents of FIG. 13 laid open on the wide area network 20 and transmit a signal for proposing CM broadcasting for a free CM frame in step S82 of FIG. 16 which is hereinafter described. Therefore, the CPU 21 of the personal computer 9 stores signals representative of expected broadcasting conditions transmitted from the personal computers 1 to 3 of the sponsors A to C and received by the network interface 30 through the wide area network 20 and the hub 4 onto the HDD 28.

In step S53, the CPU 21 discriminates whether or not a deadline for the tender has come. If it is discriminated in step S53 that the deadline for the tender has not come, then the processing in step S53 is repeated until it is discriminated that the deadline for the tender has come.

If it is discriminated in step S53 that the deadline for the tender has come, then the CPU 21 reads out, in step S54, the various conditions for the tender inputted from the sponsors A to C and stored on the HDD 28 in step S52 through the input/output interface 25 and the internal bus 24 and counts the conditions.

In step S55, the CPU 21 transmits a result of the tender counted in step S54 to the personal computer 12 of the broadcasting station A through the internal bus 24, input/output interface 25, network interface 30, hub 4, wide area network 20 and hub 5.

In step S56, the CPU 21 discriminates whether or not a signal representative of determination of a sponsor has been inputted from the personal computer 12 of the broadcasting station A through the hub 5, wide area network 20, hub 4, network interface 30, input/output interface 25 and internal bus 24.

If it is discriminated in step S56 that a signal representative of determination of a sponsor has been inputted, then the CPU 21 notifies, in step S57, the personal computer 1 of the determined sponsor (here, it is assumed that the sponsor is the sponsor A) of acquisition of the CM frame through the internal bus 24, input/output interface 25, network interface 30, hub 4 and wide area network 20 and notifies the AV server 11 so that a CM material may be registered. Then, the network interface 57 of the AV server 11 receives the CM material transmitted through the wide area network 20 and the hub 4 from the personal computer 1. The CPU 54 of the AV server 11 stores the received CM material onto the disk array 56 through the internal bus 55.

In step S58, the CPU 21 produces a control signal for transmitting the CM material registered into the AV server 11 in step S56 to the AV server 16 of the broadcasting station A and transmits the control signal to the computer server 10 through the internal bus 24, input/output interface 25, network interface 30 and hub 4. The AV server controller 44 of the computer server 10 produces, based on the control signal inputted thereto through the network interface 41, a control signal for transmitting the CM material registered in the AV server 11 to the AV server 16 of the broadcasting station A and transmits the control signal to the AV server 11. The CPU 54 of the AV server 11 searches for and reads out, based on the control signal inputted thereto through the network interface 57 and the internal bus 55, the corresponding CM material from the disk array 56 and transmits the CM material to the AV server 16 of the broadcasting station A through the internal bus 55, network interface 57, hub 4, wide area network 20 and hub 5.

Then in steps S59 and S60, processing similar to that in steps S11 and S12 of FIG. 6 is executed, and the processing is ended thereby.

If it is discriminated in step S56 that an input of determination of a sponsor has not been received, then the CPU 21 discriminates in step S61 based on a signal inputted thereto through the hub 5, wide area network 20, hub 4, network interface 30, input/output interface 25 and internal bus 24 whether or not a signal representative of resetting of conditions has been inputted from the personal computer 12 of the broadcasting station A.

If it is discriminated in step S61 that a signal representative of resetting of conditions has been inputted, then the processing returns to step S52 so that processing beginning with step S52 is repeated. If it is discriminated in step S61 that a signal representative of resetting of conditions has not been inputted, then the processing is ended.

It is to be noted that, while it is described that the transaction form in the processing described hereinabove with reference to FIG. 12 is a tender, naturally the transaction form may naturally be an auction.

Subsequently, a CM registration process of a broadcasting station which is executed in parallel to the processing described with reference to FIG. 12 is described with reference to a flow chart of FIG. 14. Here, description is given of a case wherein the broadcasting station A registers a free CM frame into the intermediator.

In step S71, the CPU 21 of the personal computer 12 of the broadcasting station A accesses the computer server 10 of the intermediator through the hub 5, wide area network 20 and hub 4 to register a free CM frame.

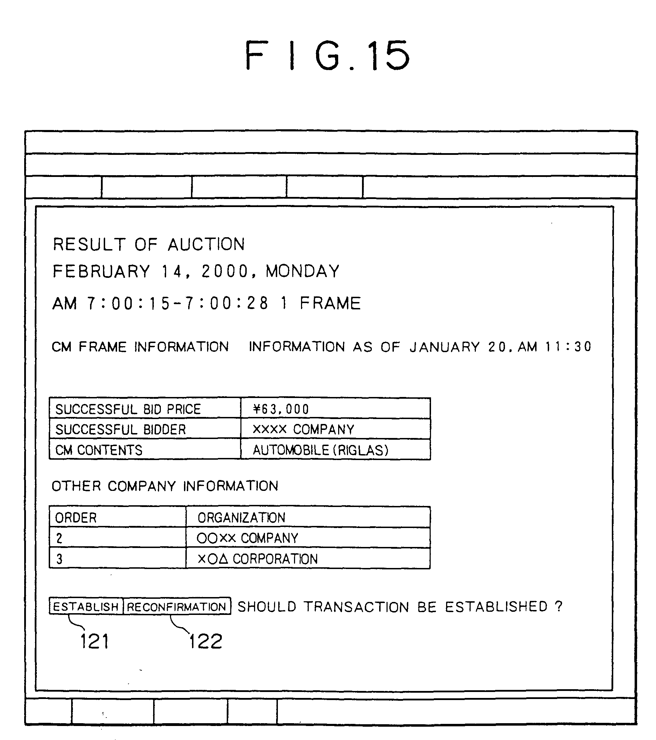

In step S72, the network interface 30 receives the signal corresponding to the result of the tender and transmitted from the personal computer 9 of the intermediator in step S55 of FIG. 12. The CPU 21 supplies the received signal to the outputting section 27 so that it may be displayed on the outputting section 27. An example of the tender result displayed on the outputting section 27 at this time is shown in FIG. 15. The user can confirm the tender result of FIG. 15 to determine whether or not the transaction should be established. When the user tries to establish the transaction, the user selects a button 121, but when the user wants to confirm the registered expected CM broadcasting conditions and so forth again, the user selects another button 122.

In step S73, the CPU 21 discriminates based on a signal inputted thereto through the inputting section 26, input/output interface 25 and internal bus 24 whether or not the user wants to establish the transaction, that is, whether or not the button 121 of FIG. 15 has been selected.

If it is discriminated in step S73 that the transaction is to be established, then the CPU 21 receives, in step S74, the CM material transmitted from the AV server 11 of the intermediator in step S58 of FIG. 12 through the hub 4, wide area network 20 and hub 5. Then, the CM is broadcast through processing similar to that in step S44 of FIG. 11.

Then in steps S75 and S76, processing similar to that in steps S45 and S46 of FIG. 11 is performed, and then the processing is ended.

If it is discriminated in step S73 that the transaction is not to be established, then the CPU 21 transmits, in step S77, a signal corresponding to the expected broadcasting conditions inputted by the user using the inputting section 26 again to the computer server 10 of the intermediator through the internal bus 24, input/output interface 25, network interface 30, wide area network 20 and hub 4, and then the processing is ended.

Subsequently, a CM registration process of a sponsor executed in parallel to the processes described hereinabove with reference to FIGS. 12 and 14 is described with reference to a flow chart of FIG. 16. Here, description is given of a case wherein the sponsor A performs CM registration for a free CM frame presented by the broadcasting station A.

In step S81, the CPU 21 of the personal computer 1 of the sponsor A accesses the computer server 10 of the intermediator through the internal bus 24, input/output interface 25, network interface 30, wide area network 20 and hub 4 to read the web contents corresponding to the CM frame table presented by the broadcasting station A described hereinabove with reference to FIG. 13 and causes the outputting section 27 to display the web contents.

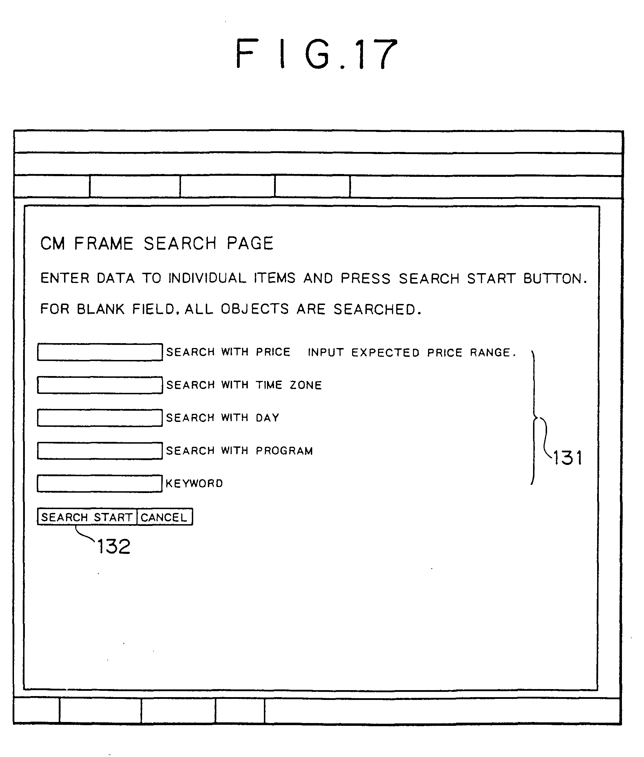

Here, not such web contents representing a table of CM frames of the broadcasting station A as shown in FIG. 13 but, for example, a CM frame search page shown in FIG. 17 may alternatively be presented to sponsors.

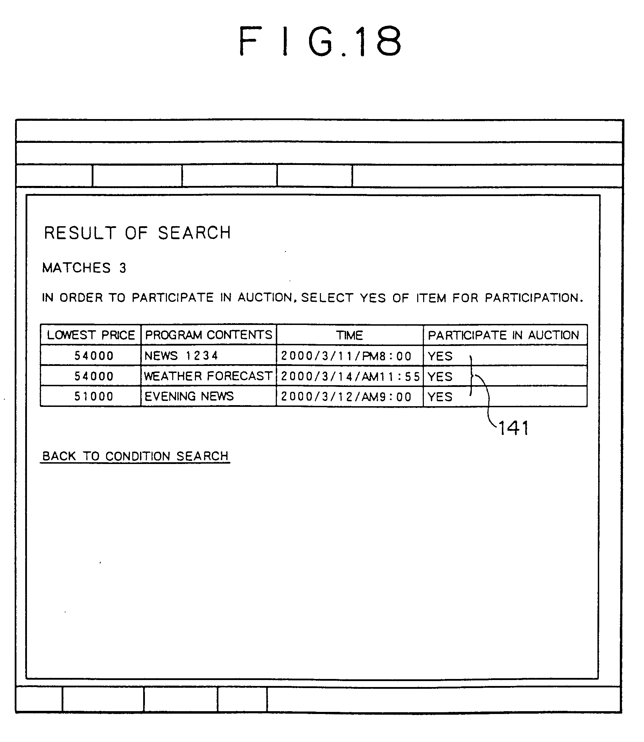

In the example of FIG. 17, the user of the personal computer 1 inputs conditions to a condition inputting text box set 131 and selects a search start button 132. The CPU 21 transmits a signal representative of the contents inputted to the condition inputting text box set 131 to the computer server 10 of the intermediator through the wide area network 20 and hub 4. The system management software 42 searches for CM frames satisfying the conditions based on the signal representative of the conditions inputted through the network interface 41, produces web contents for displaying a search result, for example, shown in FIG. 18 based on a result of the search, and transmits the web contents to the personal computer 1 through the hub 4 and wide area network 20.

The network interface 30 of the personal computer 1 receives the web contents representative of the search result shown in FIG. 18, and the CPU 21 supplies the signal to the outputting section 27 so as to be displayed. The user of the personal computer 1 refers to the web contents representative of the search result of FIG. 18 and selects, when a CM frame in which CM broadcasting is expected is present, one of link buttons 141 which corresponds to the expected CM frame. The CPU 21 receives an input of a signal representative of the operation of the user based on a signal inputted through the input/output interface 25 and the internal bus 24 from the inputting section 26 and transmits a signal representative of the CM frame selected by the user to the computer server 10 of the intermediator through the internal bus 24, input/output interface 25, network interface 30, wide area network 20 and hub 4.

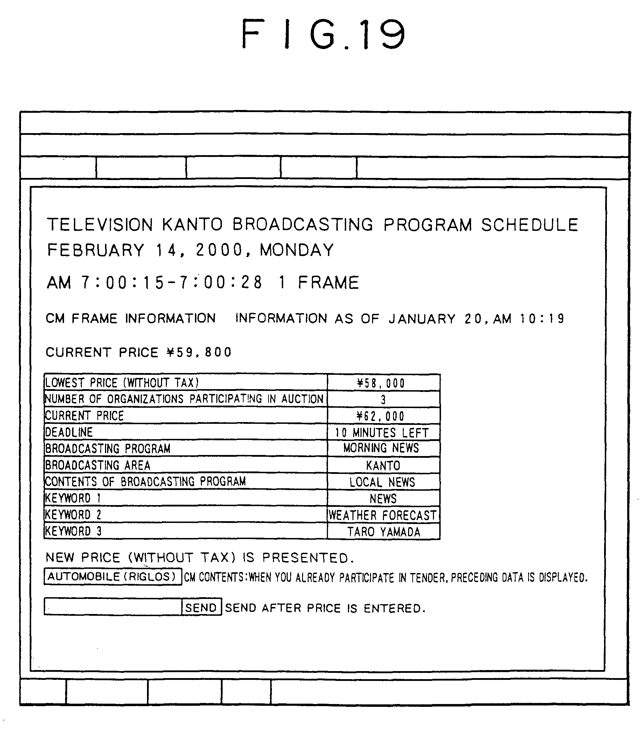

The system management software 42 of the computer server 10 searches for conditions of the pertaining CM frame from the database 45 based on the signal representative of the CM frame selected by the user of the personal computer 1 of the sponsor A inputted through the network interface 41, produces such web contents for displaying CM frame information including detailed information of the CM frame such as the expected lowest price, a broadcasting area and so forth as illustrated in FIG. 19, and transmits the web contents to the personal computer 1 through the network interface 41, hub 4 and wide area network 20.

In step S82, the user inputs an expected amount of money and so forth for the expected CM frame from among the free CM frames confirmed in step S81 using the inputting section 26. The CPU 21 transmits a signal corresponding to the expected conditions inputted by the user from the inputting section 26 through the input/output interface 25 and the internal bus 24 to the personal computer 9 of the intermediator through the internal bus 24, input/output interface 25, network interface 30, wide area network 20 and hub 4.

In step S83, the CPU 21 discriminates, based on the signal received by the network interface 30 and inputted through the input/output interface 25 and the internal bus 24, whether or not a notification of acquisition of the CM frame transmitted from the personal computer 9 of the intermediator in step S57 of FIG. 12 has been received. If it is discriminated in step S83 that a signal mentioned has not been received, then the processing is ended.

If it is discriminated in step S83 that a notification of acquisition of the CM frame has been received, then since the CM is broadcast from the broadcasting station A by the processing in step S74 of FIG. 14, processing similar to that in steps S27 and S28 of FIG. 10 is executed in steps S84 and S85, and then the processing is ended.

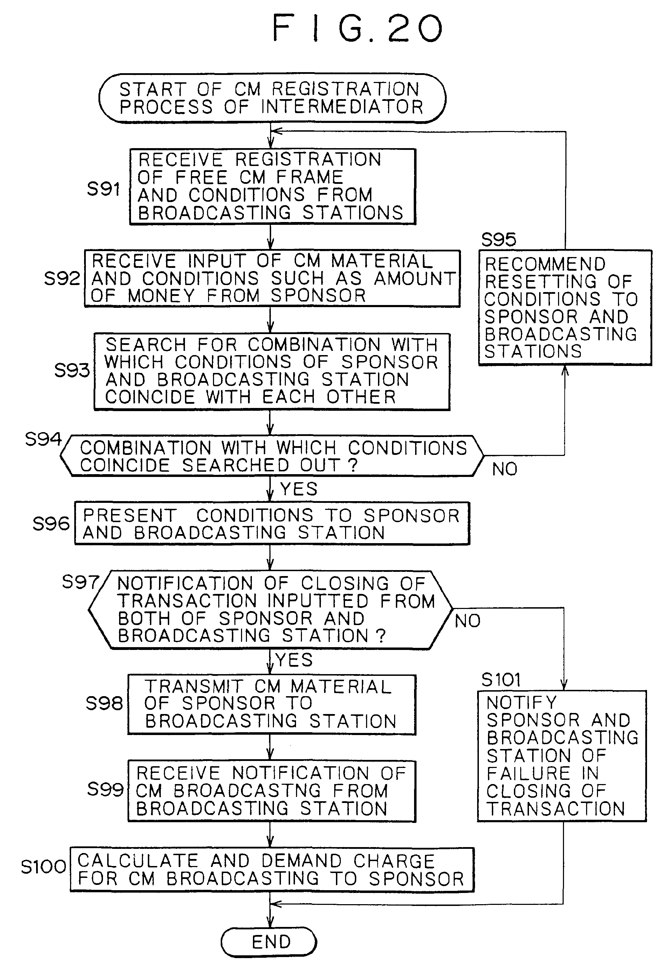

In the processing described above, one of the sponsors A to C or the broadcasting stations A to D registers expected conditions for CM broadcasting into the intermediator in advance, and a tender or an auction of a CM frame is performed by referring to the expected conditions. However, it is otherwise possible, for example, that the intermediator receives registrations of a CM material and expected conditions for CM broadcasting from the sponsors A to C in advance and receives registrations of a free CM frame and expected conditions for CM broadcasting from the broadcasting stations A to D in advance and then searches for a combination of those of the conditions which coincide with each other from among the registrations to promote transaction. A CM registration process of the intermediator in such a case as just described is described with reference to a flow chart of FIG. 20.

In step S91, the system management software 42 of the computer server 10 of the intermediator receives an input of free CM frames and expected conditions when a CM is broadcast in any of the CM frames from the broadcasting stations A to D through the wide area network 20 and the hub 4 and registers them into the database 45.

In step S92, the system management software 42 of the computer server 10 performs similar processing to that in step S1 of FIG. 6 to receive an input of a CM material and expected conditions for CM broadcasting from each of the sponsors A to C and register them into the database 45.

In step S93, the system management software 42 of the computer server 10 searches for a combination of those of the conditions of the sponsors A to C and the broadcasting stations A to D which coincide with each other from the database 45. In the search, for example, a condition of the sponsors A to C side may be used as a key or alternatively a condition of the broadcasting stations A to D side may be used as a key.

In step S94, the system management software 42 of the computer server 10 discriminates whether or not a combination of coincident conditions of the sponsors and the broadcasting stations has been searched out.

If it is discriminated in step S94 that a combination of coincident conditions has not been searched out, then in step S95, the system management software 42 of the computer server 10 produces a signal representing that a combination of coincident conditions has not been searched out and transmits the signal to the personal computer 9 through the network interface 41 and the hub 4. The CPU 21 of the personal computer 9 produces a signal for advising resetting of expected CM broadcasting conditions based on the signal inputted thereto through the network interface 30, input/output interface 25 and internal bus 24 because a party of a transaction whose conditions coincide with the expected conditions for CM broadcasting at present is not found. Then, the CPU 21 transmits the signal to the personal computers 1 to 3 of the sponsors A to C and the personal computers 12 to 15 of the broadcasting stations A to D through the internal bus 24, input/output interface 25, network interface 30 and wide area network 20. Then, the processing returns to step S91 so that the succeeding processing is repeated.

If it is discriminated in step S94 that a combination of coincident conditions has been searched out, then in step S96, the system management software 42 of the computer server 10 produces a signal representative of the combination of the coincident conditions and the individual conditions and transmits the signal to the personal computer 9 through the network interface 41 and hub 4. Here, description is given on the supposition that the conditions of the sponsor A and the broadcasting station A coincide with each other. The CPU 21 of the personal computer 9 produces signals for presenting the respective conditions to the sponsor A and the broadcasting station A based on the signal inputted through the network interface 30, input/output interface 25 and internal bus 24 and transmits the signals to the personal computer 1 of the sponsor A through the internal bus 24, input/output interface 25, network interface 30 and wide area network 20 and to the personal computer 12 of the broadcasting station A through the internal bus 24, input/output interface 25, network interface 30, wide area network 20 and hub 5.

In step S97, the CPU 21 of the personal computer 9 discriminates, based on signals transmitted from the personal computer 1 of the sponsor A and the personal computer 12 of the broadcasting station A and inputted thereto through the wide area network 20, hub 4, network interface 30, input/output interface 25 and internal bus 24, whether or not a notification of establishment of a transaction has been inputted from the sponsor A and the broadcasting station A.

If it is discriminated in step S97 that a notification of establishment of a transaction has been inputted from the sponsor A and the broadcasting station A, then in step S98, the CPU 21 of the personal computer 9 produces a control signal for transmitting the CM material of the sponsor A registered on the disk array 56 of the AV server 11 to the broadcasting station A and transmits the control signal to the computer server 10 through the internal bus 24, input/output interface 25, network interface 30 and hub 4. The AV server controller 44 of the computer server 10 produces a control signal for searching for the CM material of the sponsor A and transmitting the CM material to the broadcasting station A based on the control signal inputted through the network interface 41 and outputs the control signal to the AV server 11 through the network interface 41 and the hub 4. The CPU 54 of the AV server 11 searches for the CM material of the sponsor A registered on the disk array 56 in accordance with the control signal inputted thereto through the network interface 57 and the internal bus 55 and transmits the CM material to the personal computer 12 of the broadcasting station A through the internal bus 55, network interface 57, hub 4, wide area network 20 and hub 5.

Then in steps S99 and S100, processing similar to that in steps S11 and S12 of FIG. 6 is performed, and then the processing is ended.

If it is discriminated in step S97 that a notification of establishment of a transaction has not been inputted from at least one of them, then in step S101, the CPU 21 of the personal computer 9 produces a signal representing that a transaction has not been established and transmits the signal to the personal computer 1 of the sponsor A through the internal bus 24, input/output interface 25, network interface 30 and wide area network 20 and to the personal computer 12 of the broadcasting station A through the internal bus 24, input/output interface 25, network interface 30, wide area network 20 and hub 5. Then, the processing is ended.

In the process described above with reference to FIG. 20, the intermediator performs intermediation of a transaction between the sponsors A to C and the broadcasting stations A to D. However, it is otherwise possible, for example, that the intermediator buys CM broadcasting frames in advance from a broadcasting station and sells the CM broadcasting frames to the sponsors A to C. In this instance, for example, the intermediator may lay open conditions for the CM frames to be bought to raise investors and buy the CM frames using the contributions of the investors and then distribute a profit obtained by selling the CM broadcasting frames to the sponsors A to C to the investors.

While the series of processes described above can be executed by hardware, it may otherwise be executed by software. Where the series of processes is executed by software, a program which constructs the software is installed from a recording medium into a computer incorporated in hardware for exclusive use or, for example, a personal computer for universal use which can execute various functions by installing various programs.

The recording medium is formed as a package medium such as, as shown in FIG. 2, a magnetic disk 31 (including a floppy disk), an optical disk 32 (including a CD-ROM (Compact Disk-Read Only Memory) and a DVD (Digital Versatile Disk)), or a magneto-optical disk 33 (including an MD (Mini-Disk)), or a semiconductor memory 34 which has the program recorded thereon or therein and is distributed in order to provide the program to a user separately from a computer.

Further, in the present specification, the steps which describe the program stored in or on a recording medium may be but need not necessarily be processed in a time series in the order as described, and include processes which are executed parallelly or individually without being processed in a time series.

It is to be noted that, in the present specification, the term "system" represents an entire apparatus which is composed of a plurality of apparatus.

While a preferred embodiment of the present invention has been described using specific terms, such description is for illustrative purposes only, and it is to be understood that changes and variations may be made without departing from the spirit or scope of the following claims.

## Claims

1. An information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
first reception control means for controlling reception of first information transmitted from any of said first information processing apparatus of the sponsor or sponsors;
second reception control means for controlling reception of second information transmitted from any of said second information processing apparatus of the broadcasting station or stations;
information production means for producing third information for assistance to a transaction to be performed regarding broadcasting of a commercial message by any of the sponsors and any of the broadcasting stations based on the first information and the second information; and
transmission control means for controlling transmission of the third information produced by said information production means through the network.

2. An information processing apparatus according to claim 1, wherein the first information includes information regarding an expected broadcasting time zone in which the commercial message of the sponsor is to be broadcast while the second information includes an expected broadcasting charge when the broadcasting station broadcasts the commercial message, and said information production means selects the second information having information which coincides with the expected broadcasting time zone and has the lowest expected broadcasting charge and produces the third information based on the selected second information and said transmission control means controls transmission of the third information so that the third information is transmitted to the first information processing apparatus of the sponsor.

3. An information processing apparatus according to claim 1, wherein the first information includes an expected broadcasting charge when the sponsor requests for broadcasting of a commercial message, and said information production means selects the first information which has the highest expected broadcasting charge and produces the third information based on the selected second information and said transmission control means controls transmission of the third information so that the third information is transmitted to said second information processing apparatus of the broadcasting station.

4. An information processing method for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
a first reception control step of controlling reception of first information transmitted from any of said first information processing apparatus of the sponsor or sponsors;
a second reception control step of controlling reception of second information transmitted from any of said second information processing apparatus of the broadcasting station or stations;
an information production step of producing third information for assistance to a transaction to be performed regarding broadcasting of a commercial message by any of the sponsors and any of the broadcasting stations based on the first information and the second information; and
a transmission control step of controlling transmission of the third information produced by the processing of the information production step through the network.

5. A recording medium on which a computer-readable program for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, the program comprising:
a first reception control step of controlling reception of first information transmitted from any of said first information processing apparatus of the sponsor or sponsors;
a second reception control step of controlling reception of second information transmitted from any of said second information processing apparatus of the broadcasting station or stations;
an information production step of producing third information for assistance to a transaction to be performed regarding broadcasting of a commercial message by the sponsor and the broadcasting station based on the first information and the second information; and
a transmission control step of controlling transmission of the third information produced by the processing of the information production step through the network.

6. An information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
first reception control means for controlling reception of first information transmitted from any of said first information processing apparatus of the sponsor or sponsors and representative of conditions regarding a commercial message;
second reception control means for controlling reception of second information transmitted from any of said second information processing apparatus of the broadcasting station or stations and representative of conditions regarding the commercial message;
search means for searching for a combination of those of the conditions for a commercial message included in the first information and the second information received under the control of said first reception control means and said second reception control means which coincide with each other;
information production means for producing, when a combination of the first information and the second information with which the conditions for the commercial message coincide with each other is searched out, third information regarding the parties of a transaction between which the conditions for the commercial message coincide with each other; and
transmission control means for controlling transmission of the third information produced by said information production means through the network.

7. An information processing apparatus according to claim 6, wherein said first reception control means controls reception of the first information representative of conditions for a commercial message transmitted from any said information processing apparatus of the sponsors, and said second reception control means controls reception of the second information representative of conditions for a commercial message transmitted from said second information processing apparatus of the broadcasting stations.

8. An information processing method for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
a first reception control step of controlling reception of first information transmitted from any of said first information processing apparatus of the sponsor or sponsors and representative of conditions regarding the commercial message;
a second reception control step of controlling reception of second information transmitted from any of said second information processing apparatus of the broadcasting station or stations and representative of conditions regarding the commercial message;
a search step of searching for a combination of those of the conditions for a commercial message included in the first information and the second information received under the control of the processing of the first reception control step and the processing of the second reception control step which coincide with each other;
an information production step of producing, when a combination of the first information and the second information with which the conditions for the commercial message coincide with each other is searched out by the processing of the search step, third information regarding the parties of a transaction between which the conditions for the commercial message coincide with each other; and
a transmission control step of controlling transmission of the third information produced by the processing of the information production step through the network.

9. A recording medium on which a computer-readable program for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, the program comprising:
a first reception control step of controlling reception of first information transmitted from any of said first information processing apparatus of the sponsor or sponsors and representative of conditions regarding a commercial message;
a second reception control step of controlling reception of second information transmitted from any of said second information processing apparatus of the broadcasting station or stations and representative of conditions regarding a commercial message;
a search step of searching for a combination of those of the conditions for a commercial message included in the first information and the second information received under the control of the processing of the first reception control step and the processing of the second reception control step which coincide with each other;
an information production step of producing, when a combination of the first information and the second information with which the conditions for the commercial message coincide with each other is searched out by the processing of the search step, third information regarding the parties of a transaction between which the conditions for a commercial message coincide with each other; and
a transmission control step of controlling transmission of the third information produced by the processing of the information production step through the network.

10. An information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
first reception control means for controlling reception of first information transmitted from any of said first information processing apparatus of the sponsor or sponsors;
second reception control means for controlling reception of second information transmitted from any of said second information processing apparatus of the broadcasting station or stations;
first information production means for producing third information for assistance to a transaction to be performed regarding broadcasting of a commercial message by any of the sponsors and any of the broadcasting stations based on the first information received under the control of said first reception control means;
first transmission control means for controlling transmission of the third information produced by said first information production means through the network to the broadcasting station;
second information production means for producing fourth information for assistance to a transaction to be performed regarding broadcasting of a commercial message by any of the sponsors and any of the broadcasting stations based on the second information received under the control of said second reception control means; and
second transmission control means for controlling transmission of the fourth information produced by said second information production means to the sponsor through the network.

11. An information processing method for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
a first reception control step of controlling reception of first information transmitted from any of said first information processing apparatus of the sponsor or sponsors;
a second reception control step of controlling reception of second information transmitted from any of said second information processing apparatus of the broadcasting station or stations;
a first information production step of producing third information for assistance to a transaction to be performed regarding broadcasting of a commercial message by any of the sponsors and any of the broadcasting stations based on the first information received under the control of the processing of the first reception control step;
a first transmission control step of controlling transmission of the third information produced by the processing of the first information production step through the network to the broadcasting station;
a second information production step of producing fourth information for assistance to a transaction to be performed regarding broadcasting of a commercial message by any of the sponsors and any of the broadcasting station or stations based on the second information received under the control of the processing of the second reception control step; and
a second transmission control step of controlling transmission of the fourth information produced by the processing of the second information production step to the sponsor through the network.

12. A recording medium on which a computer-readable program for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, the program comprising:
a first reception control step of controlling reception of first information transmitted from any of said first information processing apparatus of the sponsor or sponsors;
a second reception control step of controlling reception of second information transmitted from any of said second information processing apparatus of the broadcasting station or stations;
a first information production step of producing third information for assistance to a transaction to be performed regarding broadcasting of a commercial message by any of the sponsors and any of the broadcasting stations based on the first information received under the control of the processing of the first reception control step;
a first transmission control step of controlling transmission of the third information produced by the processing of the first information production step through the network to the broadcasting station;
a second information production step of producing fourth information for assistance to a transaction to be performed regarding broadcasting of a commercial message by any of the sponsors and any of the broadcasting station or stations based on the second information received under the control of the processing of the second reception control step; and
a second transmission control step of controlling transmission of the fourth information produced by the processing of the second information production step to the sponsor through the network.

13. A commercial message transaction system, comprising:
means for receiving a broadcasting time zone expected by a sponsor as a condition regarding a broadcasting time for a commercial message provided by the sponsor through a network;
means for receiving an amount of money expected by a broadcasting station as a condition for the commercial message to be inserted into a television program produced by the broadcasting station through the network; and
means for allowing a transaction regarding the commercial message to be established between the sponsor and the broadcasting station so that the commercial message of the sponsor may be broadcast in the time zone expected by the sponsor with the amount of money expected by the broadcasting station.

14. A commercial message transaction method, comprising the steps of:
receiving a broadcasting time zone expected by a sponsor as a condition regarding a broadcasting time for a commercial message provided by the sponsor through a network;
receiving an amount of money expected by a broadcasting station as a condition for the commercial message to be inserted into a television program produced by the broadcasting station through the network; and
allowing a transaction regarding the commercial message to be established between the sponsor and the broadcasting station so that the commercial message of the sponsor may be broadcast in the time zone expected by the sponsor with the amount of money expected by the broadcasting station.

15. A commercial message transaction system, comprising:
means for receiving a condition regarding broadcasting of a commercial message provided by a sponsor through a network;
means for receiving a condition regarding an amount of money for the commercial message to be inserted into a television program produced by a broadcasting station through the network; and
means for mediating the sponsor and the broadcasting station through the network so that a transaction in which both of the condition regarding broadcasting of the commercial message from the sponsor and the condition regarding the amount of money for the commercial message from the broadcasting station are satisfied may be performed between the sponsor and the broadcasting station.

16. A commercial message transaction method, comprising the steps of:
receiving a condition regarding broadcasting of a commercial message provided by a sponsor through a network;
receiving a condition regarding an amount of money for the commercial message to be inserted into a television program produced by a broadcasting station through the network; and
mediating the sponsor and the broadcasting station through the network so that a transaction in which both of the condition regarding broadcasting of the commercial message from the sponsor and the condition regarding the amount of money for the commercial message from the broadcasting station are satisfied may be performed between the sponsor and the broadcasting station.

17. A commercial message transaction system, comprising:
means for receiving an expected condition regarding a commercial message provided by a sponsor and an expected condition regarding the commercial message to be broadcast from a broadcasting station through a network;
means for mediating the sponsor and the broadcasting station through the network so that both of the expected condition from the sponsor and the expected condition from the broadcasting station may be satisfied; and
means for allowing a transaction regarding the commercial message to be established between the sponsor and the broadcasting station through the network when a result of the mediating processing reveals that both of the condition from the sponsor and the condition from the broadcasting station are satisfied.

18. A commercial message transaction method, comprising the steps of:
receiving an expected condition regarding a commercial message provided by a sponsor and an expected condition regarding the commercial message to be broadcast from a broadcasting station through a network;
mediating the sponsor and the broadcasting station through the network so that both of the expected condition from the sponsor and the expected condition from the broadcasting station may be satisfied; and
allowing a transaction regarding the commercial message to be established between the sponsor and the broadcasting station through the network when a result of the mediating processing reveals that both of the condition from the sponsor and the condition from the broadcasting station are satisfied.

19. A commercial message transaction system, comprising:
means for receiving, from each of a plurality of sponsors, an expected condition regarding a commercial message provided by the sponsor and receiving, from a plurality of broadcasting stations, an expected condition regarding the commercial message to be broadcast from the broadcasting station through a network;
means for appropriately responding to the sponsors and the broadcasting stations through the network with regard to the expected conditions presented by the sponsors and the expected conditions presented by the broadcasting stations to mediate the sponsors and the broadcasting stations; and
means for allowing, when a result of the mediating processing reveals that both of the condition from one of the sponsors and the condition from one of the broadcasting stations are satisfied, a transaction regarding the commercial message to be established between the sponsor and the broadcasting station through the network.

20. A commercial message transaction method, comprising the steps of:
receiving, from each of a plurality of sponsors, an expected condition regarding a commercial message provided by the sponsor and receiving, from a plurality of broadcasting stations, an expected condition regarding the commercial message to be broadcast from the broadcasting station through a network;
appropriately responding to the sponsors and the broadcasting stations through the network with regard to the expected conditions presented by the sponsors and the expected conditions presented by the broadcasting stations to mediate the sponsors and the broadcasting stations; and
allowing, when a result of the mediating processing reveals that both of the condition from one of the sponsors and the condition from one of the broadcasting stations are satisfied, a transaction regarding the commercial message to be established between the sponsor and the broadcasting station through the network.

21. An information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
first reception control means for controlling reception of first information transmitted from any of said first information processing apparatus of the sponsor or sponsors and representative of conditions regarding a commercial message;
second reception control means for controlling reception of second information transmitted from any of said second information processing apparatus of the broadcasting station or stations and representative of conditions regarding the commercial message;
information production means for producing, when the conditions regarding the commercial message included in the first information and the second information received under the control of said first reception control means and said second reception control means, respectively, coincide with each other, third information for assistance to a transaction to be performed regarding broadcasting of the commercial message between the sponsor and the broadcasting station whose conditions coincide with each other;
transmission control means for controlling transmission of the third information produced by said information production means through the network;
third reception control means for controlling reception of fourth information representing that the commercial message transmitted from the second information processing apparatus of the broadcasting station has been broadcast; and
processing means for processing accounting for the sponsor based on the fourth information received under the control of said third reception control means.

22. An information processing method for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
a first reception control step of controlling reception of first information transmitted from any of said first information processing apparatus of the sponsor or sponsors and representative of conditions regarding a commercial message;
a second reception control step of controlling reception of second information transmitted from any of said second information processing apparatus of the broadcasting station or stations and representative of conditions regarding the commercial message;
an information production step of producing, when the conditions regarding the commercial message included in the first information and the second information received under the control of said first reception control step and said second reception control step, respectively, coincide with each other, third information for assistance to a transaction to be performed regarding broadcasting of the commercial message between the sponsor and the broadcasting station whose conditions coincide with each other;
a transmission control step of controlling transmission of the third information produced by the processing of the information production step through the network;
a third reception control step of controlling reception of fourth information representing that the commercial message transmitted from the second information processing apparatus of the broadcasting station has been broadcast; and
a processing step of processing accounting for the sponsor based on the fourth information received under the control of the processing of the third reception control step.

23. A recording medium on which a computer-readable program for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, the program comprising:
a first reception control step of controlling reception of first information transmitted from any of said first information processing apparatus of the sponsor or sponsors and representative of conditions regarding a commercial message;
a second reception control step of controlling reception of second information transmitted from any of said second information processing apparatus of the broadcasting station or stations and representative of conditions regarding the commercial message;
an information production step of producing, when the conditions regarding the commercial message included in the first information and the second information received under the control of said first reception control step and said second reception control step, respectively, coincide with each other, third information for assistance to a transaction to be performed regarding broadcasting of the commercial message between the sponsor and the broadcasting station whose conditions coincide with each other;
a transmission control step of controlling transmission of the third information produced by the processing of the information production step through the network;
a third reception control step of controlling reception of fourth information representing that the commercial message transmitted from the second information processing apparatus of the broadcasting station has been broadcast; and
a processing step of processing accounting for the sponsor based on the fourth information received under the control of the processing of the third reception control step.

24. An information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
first reception control means for controlling reception of first information transmitted from any of said first information processing apparatus of the sponsor or sponsors;
second reception control means for controlling reception of second information transmitted from any of said second information processing apparatus of the broadcasting station or stations;
information production means for producing third information for assistance to a transaction to be performed regarding broadcasting of a commercial message between any of the sponsors and any of the broadcasting stations based on the first information and the second information received under the control of said first reception control means and said second reception control means, respectively;
transmission control means for controlling transmission of the third information produced by said information production means through the network;
confirmation means for confirming that the commercial message has been broadcast by the broadcasting station; and
processing means for processing accounting for the sponsor when the broadcasting of the commercial message has been confirmed by said confirmation means.

25. An information processing method for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
a first reception control step of controlling reception of first information transmitted from any of said first information processing apparatus of the sponsor or sponsors;
a second reception control step of controlling reception of second information transmitted from any of said second information processing apparatus of the broadcasting station or stations;
an information production step of producing third information for assistance to a transaction to be performed regarding broadcasting of a commercial message between any of the sponsors and any of the broadcasting stations based on the first information and the second information received under the control of the processing of the first reception control step and the processing of the second reception control step, respectively;
a transmission control step of controlling transmission of the third information produced by the processing of the information production step through the network;
a confirmation step of confirming that the commercial message has been broadcast by the broadcasting station; and
a processing step of processing accounting for the sponsor when the broadcasting of the commercial message has been confirmed by the processing of the confirmation step.

26. A recording medium on which a computer-readable program for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, the program comprising:
a first reception control step of controlling reception of first information transmitted from any of said first information processing apparatus of the sponsor or sponsors;
a second reception control step of controlling reception of second information transmitted from any of said second information processing apparatus of the broadcasting station or stations;
an information production step of producing third information for assistance to a transaction to be performed regarding broadcasting of a commercial message between any of the sponsors and any of the broadcasting stations based on the first information and the second information received under the control of the processing of the first reception control step and the processing of the second reception control step, respectively;
a transmission control step of controlling transmission of the third information produced by the processing of the information production step through the network;
a confirmation step of confirming that the commercial message has been broadcast by the broadcasting station; and
a processing step of processing accounting for the sponsor when the broadcasting of the commercial message has been confirmed by the processing of the confirmation step.

27. An accounting system for a commercial message, comprising:
means for receiving an expected condition regarding a commercial message provided by a sponsor and an expected condition regarding the commercial message to be broadcast from a broadcasting station through a network;
means for allowing a transaction regarding the commercial message to be established between the sponsor and the broadcasting station through the network when the expected condition of the sponsor and the expected condition of the broadcasting station coincide with each other; and
means for accounting for the sponsor when a notification representing that the commercial message has been broadcast actually based on the established transaction is received from the broadcasting station.

28. An accounting method for a commercial message, comprising the steps of:
receiving an expected condition regarding a commercial message provided by a sponsor and an expected condition regarding the commercial message to be broadcast from a broadcasting station through a network;
allowing a transaction regarding the commercial message to be established between the sponsor and the broadcasting station through the network when the expected condition of the sponsor and the expected condition of the broadcasting station coincide with each other; and
accounting for the sponsor when a notification representing that the commercial message has been broadcast actually based on the established transaction is received from the broadcasting station.

29. An accounting system for a commercial message, comprising:
means for receiving an expected condition regarding a commercial message provided by a sponsor and an expected condition regarding the commercial message to be broadcast from a broadcasting station through a network;
means for mediating the sponsor and the broadcasting station so that both of the expected condition of the sponsor and the expected condition of the broadcasting station may be satisfied to establish a transaction regarding the commercial message between the sponsor and the broadcasting station through the network; and
means for imposing a charge regarding the transaction upon the sponsor after it is confirmed that the commercial message has been broadcast actually.

30. An accounting method for a commercial message, comprising the steps of:
receiving an expected condition regarding a commercial message provided by a sponsor and an expected condition regarding the commercial message to be broadcast from a broadcasting station through a network;
mediating the sponsor and the broadcasting station so that both of the expected condition of the sponsor and the expected condition of the broadcasting station may be satisfied to establish a transaction regarding the commercial message between the sponsor and the broadcasting station through the network; and
imposing a charge regarding the transaction upon the sponsor after it is confirmed that the commercial message has been broadcast actually.

31. An information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
first reception control means for controlling reception of first information transmitted from any of said first information processing apparatus of the sponsor or sponsors;
first transmission control means for controlling transmission of the first information received under the control of said first reception control means to any of said second information processing apparatus of the broadcasting station or stations;
second reception control means for controlling reception of second information transmitted from any of said second information processing apparatus of the broadcasting station or stations which confirms the first information transmitted under the control of said first transmission control means; and
second transmission control means for controlling transmission of third information for assistance to a transaction regarding the commercial message based on the second information received under the control of said second reception control means to any of said first information processing apparatus of the sponsor or sponsors.

32. An information processing method for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, comprising:
a first reception control step of controlling reception of first information transmitted from any of said first information processing apparatus of the sponsor or sponsors;
a first transmission control step of controlling transmission of the first information received under the control of the processing of the first reception control step to any of said second information processing apparatus of the broadcasting station or stations;
a second reception control step of controlling reception of second information transmitted from any of said second information processing apparatus of the broadcasting station or stations which confirms the first information transmitted under the control of the processing of the first transmission control step; and
a second transmission control step of controlling transmission of third information for assistance to a transaction regarding the commercial message based on the second information received under the control of the processing of the second reception control step to any of said first information processing apparatus of the sponsor or sponsors.

33. A recording medium on which a computer-readable program for an information processing apparatus to which one or more first information processing apparatus of a sponsor or sponsors which each wants a commercial message to be broadcast and one or more second information processing apparatus of a broadcasting station or broadcasting stations which each broadcasts a commercial message are connected by a network, the program comprising:
a first reception control step of controlling reception of first information transmitted from any of said first information processing apparatus of the sponsor or sponsors;
a first transmission control step of controlling transmission of the first information received under the control of the processing of the first reception control step to any of said second information processing apparatus of the broadcasting station or stations;
a second reception control step of controlling reception of second information transmitted from any of said second information processing apparatus of the broadcasting station or stations which confirms the first information transmitted under the control of the processing of the first transmission control step; and
a second transmission control step of controlling transmission of third information for assistance to a transaction regarding the commercial message based on the second information received under the control of the processing of the second reception control step to any of said first information processing apparatus of the sponsor or sponsors.

34. An information processing apparatus to which one or more first information processing apparatus of a sponsor or sponsors which each wants a commercial message to be broadcast and a plurality of second information processing apparatus of a plurality of broadcasting stations which each broadcasts a commercial message are connected by a network, comprising:
first reception control means for controlling reception of first information transmitted from any of said first information processing apparatus of the sponsor or sponsors;
first transmission control means for controlling transmission of the first information received under the control of said first reception control means to said second information processing apparatus of the broadcasting stations;
second reception control means for controlling reception of second information transmitted from said second information processing apparatus of those of the broadcasting stations which confirm the first information transmitted under the control of said first transmission control means and respond to the first information; and
second transmission control means for controlling transmission of third information for assistance to a transaction regarding the commercial message based on the second information received under the control of said second reception control means to any of said first information processing apparatus of the sponsor or sponsors.

35. An information processing method for an information processing apparatus to which one or more first information processing apparatus of a sponsor or sponsors which each wants a commercial message to be broadcast and a plurality of second information processing apparatus of a plurality of broadcasting stations which each broadcasts a commercial message are connected by a network, comprising:
a first reception control step of controlling reception of first information transmitted from any of said first information processing apparatus of the sponsor or sponsors;
a first transmission control step of controlling transmission of the first information received under the control of the processing of the first reception control step to said second information processing apparatus of the broadcasting stations;
a second reception control step of controlling reception of second information transmitted from said second information processing apparatus of those of the broadcasting stations which confirm the first information transmitted under the control of the processing of the first transmission control step and respond to the first information; and
a second transmission control step of controlling transmission of third information for assistance to a transaction regarding the commercial message based on the second information received under the control of the processing of the second reception control step to any of said first information processing apparatus of the sponsor or sponsors.

36. A recording medium on which a computer-readable program for an information processing apparatus to which one or more first information processing apparatus of a sponsor or sponsors which each wants a commercial message to be broadcast and a plurality of second information processing apparatus of a plurality of broadcasting stations which each broadcasts a commercial message are connected by a network, the program comprising:
a first reception control step of controlling reception of first information transmitted from any of said first information processing apparatus of the sponsor or sponsors;
a first transmission control step of controlling transmission of the first information received under the control of the processing of the first reception control step to said second information processing apparatus of the broadcasting stations;
a second reception control step of controlling reception of second information transmitted from said second information processing apparatus of those of the broadcasting stations which confirm the first information transmitted under the control of the processing of the first transmission control step and respond to the first information; and
a second transmission control step of controlling transmission of third information for assistance to a transaction regarding the commercial message based on the second information received under the control of the processing of the second reception control step to any of said first information processing apparatus of the sponsor or sponsors.

37. An information processing apparatus to which a plurality of first information processing apparatus of a plurality of sponsors which each wants a commercial message to be broadcast and one or more second information processing apparatus of a broadcasting station or broadcasting stations which each broadcasts a commercial message are connected by a network, comprising:
first reception control means for controlling reception of first information transmitted from any of said first information processing apparatus of the sponsors;
second reception control means for controlling reception of second information transmitted from any of said second information processing apparatus of the broadcasting stations;
search means for searching, from within the first information transmitted from said first information processing apparatus of the sponsors and received under the control of said first reception control means, for the first information which coincides with contents of the second information received under the control of said second reception control means; and
transmission control means for controlling transmission of the first information searched out by said search means to said second information processing apparatus of the broadcasting stations.

38. An information processing method for an information processing apparatus to which a plurality of first information processing apparatus of a plurality of sponsors which each wants a commercial message to be broadcast and one or more second information processing apparatus of a broadcasting station or broadcasting stations which each broadcasts a commercial message are connected by a network, comprising:
a first reception control step of controlling reception of first information transmitted from any of said first information processing apparatus of the sponsors;
a second reception control step of controlling reception of second information transmitted from any of said second information processing apparatus of the broadcasting stations;
a search step of searching, from within the first information transmitted from said first information processing apparatus of the sponsors and received under the control of the processing of the first reception control step, for the first information which coincides with contents of the second information received under the control of the processing of the second reception control step; and
a transmission control step of controlling transmission of the first information searched out by the processing of the search step to said second information processing apparatus of the broadcasting stations.

39. A recording medium on which a computer-readable program for an information processing apparatus to which a plurality of first information processing apparatus of a plurality of sponsors which each wants a commercial message to be broadcast and one or more second information processing apparatus of a broadcasting station or broadcasting stations which each broadcasts a commercial message are connected by a network, comprising:
a first reception control step of controlling reception of first information transmitted from any of said first information processing apparatus of the sponsors;
a second reception control step of controlling reception of second information transmitted from any of said second information processing apparatus of the broadcasting stations;
a search step of searching, from within the first information transmitted from said first information processing apparatus of the sponsors and received under the control of the processing of the first reception control step, for the first information which coincides with contents of the second information received under the control of the processing of the second reception control step; and
a transmission control step of controlling transmission of the first information searched out by the processing of the search step to said second information processing apparatus of the broadcasting stations.

40. A commercial message transaction system, comprising:
means for receiving an expected condition regarding broadcasting of a commercial message provided by a sponsor through a network;
means for presenting the expected condition of the sponsor regarding the commercial message to a broadcasting station through the network; and
means for presenting a response from the broadcasting station to the condition of the sponsor to the sponsor through the network to promote a transaction between the sponsor and the broadcasting station.

41. A commercial message transaction method, comprising the steps of:
receiving an expected condition regarding broadcasting of a commercial message provided by a sponsor through a network;
presenting the expected condition of the sponsor regarding the commercial message to a broadcasting station through the network; and
presenting a response from the broadcasting station to the condition of the sponsor to the sponsor through the network to promote a transaction between the sponsor and the broadcasting station.

42. A commercial message transaction system, comprising:
means for receiving an expected condition regarding broadcasting of a commercial message provided by a sponsor through a network;
means for presenting the expected condition of the sponsor regarding the commercial message to a plurality of broadcasting stations through the network; and
means for presenting conditions of those of the broadcasting stations which have responded to the condition of the sponsor to the sponsor through the network to promote a transaction between the sponsor and the broadcasting stations.

43. A commercial message transaction method, comprising the steps of:
receiving an expected condition regarding broadcasting of a commercial message provided by a sponsor through a network;
presenting the expected condition of the sponsor regarding the commercial message to a plurality of broadcasting stations through the network; and
presenting conditions of those of the broadcasting stations which have responded to the condition of the sponsor to the sponsor through the network to promote a transaction between the sponsor and the broadcasting stations.

44. A commercial message transaction system, comprising:
means for receiving expected conditions regarding broadcasting of a plurality of commercial messages provided individually by a plurality of sponsors through a network;
means for selecting one of the commercial messages which satisfies a condition designated by a broadcasting station; and
means for presenting the condition of the sponsor regarding the selected commercial message to the broadcasting station through the network.

45. A commercial message transaction method, comprising the steps of:
receiving expected conditions regarding broadcasting of a plurality of commercial messages provided individually by a plurality of sponsors through a network;
selecting one of the commercial messages which satisfies a condition designated by a broadcasting station; and
presenting the condition of the sponsor regarding the selected commercial message to the broadcasting station through the network.

46. An information processing apparatus to which one or more first information processing apparatus of a sponsor or sponsors which each wants a commercial message to be broadcast and a plurality of second information processing apparatus of a plurality of broadcasting stations which each broadcasts a commercial message are connected by a network, comprising:
first reception control means for controlling reception of first information transmitted from any of said first information processing apparatus of the sponsor or sponsors and representative of an expected transaction form of a commercial message;
information production means for producing second information regarding a transaction of the commercial message according to the expected transaction form of the commercial message based on the first information received under the control of said first reception control means;
first transmission control means for controlling transmission of the second information produced by said information production means to said second information processing apparatus of the broadcasting stations;
second reception control means for controlling reception of third information transmitted from any of the broadcasting stations;
transaction processing execution means for executing processing regarding the transaction of the commercial message according to the expected transaction form of the commercial message based on the third information received under the control of said second reception control means; and
second transmission control means for controlling transmission of a signal representative of a result of the transaction processing by said transaction processing execution means to said first information processing apparatus of the sponsor or sponsors.

47. An information processing apparatus according to claim 46, wherein the transaction form is a tender or an auction.

48. An information processing method for an information processing apparatus to which one or more first information processing apparatus of a sponsor or sponsors which each wants a commercial message to be broadcast and a plurality of second information processing apparatus of a plurality of broadcasting stations which each broadcasts a commercial message are connected by a network, comprising:
a first reception control step of controlling reception of first information transmitted from any of said first information processing apparatus of the sponsor or sponsors and representative of an expected transaction form of a commercial message;
an information production step of producing second information regarding a transaction of the commercial message according to the expected transaction form of the commercial message based on the first information received under the control of the processing of the first reception control step;
a first transmission control step of controlling transmission of the second information produced by the processing of the information production step to said second information processing apparatus of the broadcasting stations;
a second reception control step of controlling reception of third information transmitted from any of the broadcasting stations;
a transaction processing execution step of executing processing regarding the transaction of the commercial message according to the expected transaction form of the commercial message based on the third information received under the control of the processing of the second reception control step; and
a second transmission control step of controlling transmission of a signal representative of a result of the transaction processing by the processing of the transaction processing execution step to said first information processing apparatus of the sponsor or sponsors.

49. A recording medium on which a computer-readable program for an information processing apparatus to which one or more first information processing apparatus of a sponsor or sponsors which each wants a commercial message to be broadcast and a plurality of second information processing apparatus of a plurality of broadcasting stations which each broadcasts a commercial message are connected by a network, the program comprising:
a first reception control step of controlling reception of first information transmitted from any of said first information processing apparatus of the sponsor or sponsors and representative of an expected transaction form of a commercial message;
an information production step of producing second information regarding a transaction of the commercial message according to the expected transaction form of the commercial message based on the first information received under the control of the processing of the first reception control step;
a first transmission control step of controlling transmission of the second information produced by the processing of the information production step to said second information processing apparatus of the broadcasting stations;
a second reception control step of controlling reception of third information transmitted from any of the broadcasting stations;
a transaction processing execution step of executing processing regarding the transaction of the commercial message according to the expected transaction form of the commercial message based on the third information received under the control of the processing of the second reception control step; and
a second transmission control step of controlling transmission of a signal representative of a result of the transaction processing by the processing of the transaction processing execution step to said first information processing apparatus of the sponsor or sponsors.

50. An information processing apparatus to which one or more first information processing apparatus of a sponsor or sponsors which each wants a commercial message to be broadcast and a plurality of second information processing apparatus of a plurality of broadcasting stations which each broadcasts a commercial message are connected by a network, comprising:
first reception control means for controlling reception of first information for selection of an expected transaction form of a commercial message from between a tender and an auction transmitted from any of said first information processing apparatus of the sponsor or sponsors;
selection means for selecting one of the transaction forms based on the first information received under the control of said first reception control means;
information production means for producing second information regarding a transaction of the commercial message according to the transaction form selected by said selection means;
first transmission control means for controlling transmission of the second information produced by said information production means to said second information processing apparatus of the broadcasting stations;
second reception control means for controlling reception of third information transmitted from any of the broadcasting stations;
transaction processing execution means for executing processing regarding the transaction of the commercial message according to the transaction form selected by said selection means based on the third information received under the control of said second reception control means; and
second transmission control means for controlling transmission of a signal representative of a result of the transaction processing by said transaction processing execution means to said first information processing apparatus of the sponsor or sponsors.

51. An information processing method for an information processing apparatus to which one or more first information processing apparatus of a sponsor or sponsors which each wants a commercial message to be broadcast and a plurality of second information processing apparatus of a plurality of broadcasting stations which each broadcasts a commercial message are connected by a network, comprising:
a first reception control step of controlling reception of first information for selection of an expected transaction form of a commercial message from between a tender and an auction transmitted from any of said first information processing apparatus of the sponsor or sponsors;
a selection step of selecting one of the transaction forms based on the first information received under the control of the processing of the first reception control step;
an information production step of producing second information regarding a transaction of the commercial message according to the transaction form selected by the processing of the selection step;
a first transmission control step of controlling transmission of the second information produced by the processing of the information production step to said second information processing apparatus of the broadcasting stations;
a second reception control step of controlling reception of third information transmitted from any of the broadcasting stations;
a transaction processing execution step of executing processing regarding the transaction of the commercial message according to the transaction form selected by the selection step based on the third information received under the control of the processing of the second reception control step; and
a second transmission control step of controlling transmission of a signal representative of a result of the transaction processing by the processing of the transaction processing execution step to said first information processing apparatus of the sponsor or sponsors.

52. A recording medium on which a computer-readable program for an information processing apparatus to which one or more first information processing apparatus of a sponsor or sponsors which each wants a commercial message to be broadcast and a plurality of second information processing apparatus of a plurality of broadcasting stations which each broadcasts a commercial message are connected by a network, the program comprising:
a first reception control step of controlling reception of first information for selection of an expected transaction form of a commercial message from between a tender and an auction transmitted from any of said first information processing apparatus of the sponsor or sponsors;
a selection step of selecting one of the transaction forms based on the first information received under the control of the processing of the first reception control step;
an information production step of producing second information regarding a transaction of the commercial message according to the transaction form selected by the processing of the selection step;
a first transmission control step of controlling transmission of the second information produced by the processing of the information production step to said second information processing apparatus of the broadcasting stations;
a second reception control step of controlling reception of third information transmitted from any of the broadcasting stations;
a transaction processing execution step of executing processing regarding the transaction of the commercial message according to the transaction form selected by the selection step based on the third information received under the control of the processing of the second reception control step; and
a second transmission control step of controlling transmission of a signal representative of a result of the transaction processing by the processing of the transaction processing execution step to said first information processing apparatus of the sponsor or sponsors.

53. A commercial message transaction system for allowing a transaction to be performed between a sponsor which provides a commercial message and a plurality of broadcasting stations, comprising:
means for receiving an expected condition of the sponsor regarding a transaction form of the commercial message through a network;
means for providing one of a transaction of a tender type and another transaction of an auction type with the broadcasting stations through the network based on the transaction form designated by the sponsor; and
means for notifying the sponsor of a result of the transaction with the broadcasting stations.

54. A commercial message transaction method for allowing a transaction to be performed between a sponsor which provides a commercial message and a plurality of broadcasting stations, comprising the steps of:
receiving an expected condition of the sponsor regarding a transaction form of the commercial message through a network;
providing one of a transaction of a tender type and another transaction of an auction type with the broadcasting stations through the network based on the transaction form designated by the sponsor; and
notifying the sponsor of a result of the transaction with the broadcasting stations.

55. A commercial message transaction system for allowing a transaction to be performed between a sponsor which provides a commercial message and a plurality of broadcasting stations, comprising:
means for receiving information regarding a transaction form of the commercial message and designating one of a plurality of transaction forms from the sponsor through a network;
means for providing a transaction of the transaction form selected from the plurality of transaction forms with the information designating the transaction form with the broadcasting stations through the network; and
means for notifying the sponsor of a result of the transaction with the broadcasting stations.

56. A commercial message transaction method for allowing a transaction to be performed between a sponsor which provides a commercial message and a plurality of broadcasting stations, comprising the steps of:
receiving information regarding a transaction form of the commercial message and designating one of a plurality of transaction forms from the sponsor through a network;
providing a transaction of the transaction form selected from the plurality of transaction forms with the information designating the transaction form with the broadcasting stations through the network; and
notifying the sponsor of a result of the transaction with the broadcasting stations.

57. An information processing apparatus to which a plurality of first information processing apparatus of a plurality of sponsors which each wants a commercial message to be broadcast and one or more second information processing apparatus of a broadcasting station or stations which each broadcasts a commercial message are connected by a network, comprising:
first reception control means for controlling reception of first information transmitted from any of said second information processing apparatus of the broadcasting station or stations;
first transmission control means for controlling transmission of the first information received under the control of said first reception control means to said first information processing apparatus of the sponsors;
second reception control means for controlling reception of second information transmitted from any of said first information processing apparatus of the sponsors which confirms the first information transmitted under the control of said first transmission control means;
production means for producing third information for assistance to a transaction to be established regarding the commercial message between any of the broadcasting stations and any of the sponsors based on the second information received under the control of said second reception control means; and
second transmission control means for controlling transmission of the third information produced by said production means to said second information processing apparatus of the broadcasting station or stations.

58. An information processing apparatus according to claim 57, wherein the first information includes a condition of the broadcasting station regarding broadcasting of the commercial message, and the second information includes a condition of an expected amount of money of the sponsor for broadcasting of the commercial message.

59. An information processing apparatus according to claim 57, wherein the first information includes a condition for an expected amount of money when the broadcasting station broadcasts the commercial message, and the second information includes a condition of an expected amount of money of the sponsor for broadcasting of the commercial message.

60. An information processing method for an information processing apparatus to which a plurality of first information processing apparatus of a plurality of sponsors which each wants a commercial message to be broadcast and one or more second information processing apparatus of a broadcasting station or stations which each broadcasts a commercial message are connected by a network, comprising:
a first reception control step of controlling reception of first information transmitted from any of said second information processing apparatus of the broadcasting station or stations;
a first transmission control step of controlling transmission of the first information received under the control of the processing of the first reception control step to said first information processing apparatus of the sponsors;
a second reception control step of controlling reception of second information transmitted from any of said first information processing apparatus of the sponsors which confirms the first information transmitted under the control of the processing of the first transmission control step;
a production step of producing third information for assistance to a transaction to be established regarding the commercial message between any of the broadcasting stations and any of the sponsors based on the second information received under the control of the processing of the second reception control step; and
a second transmission control step of controlling transmission of the third information produced by the processing of the production step to said second information processing apparatus of the broadcasting station or stations.

61. A recording medium on which a computer-readable program for an information processing apparatus to which a plurality of first information processing apparatus of a plurality of sponsors which each wants a commercial message to be broadcast and one or more second information processing apparatus of a broadcasting station or stations which each broadcasts a commercial message are connected by a network, the program comprising:
a first reception control step of controlling reception of first information transmitted from any of said second information processing apparatus of the broadcasting station or stations;
a first transmission control step of controlling transmission of the first information received under the control of the processing of the first reception control step to said first information processing apparatus of the sponsors;
a second reception control step of controlling reception of second information transmitted from any of said first information processing apparatus of the sponsors which confirms the first information transmitted under the control of the processing of the first transmission control step;
a production step of producing third information for assistance to a transaction to be established regarding the commercial message between any of the broadcasting stations and any of the sponsors based on the second information received under the control of the processing of the second reception control step; and
a second transmission control step of controlling transmission of the third information produced by the processing of the production step to said second information processing apparatus of the broadcasting station or stations.

62. An information processing apparatus to which a plurality of first information processing apparatus of a plurality of sponsors which each wants a commercial message to be broadcast and one or more second information processing apparatus of a broadcasting station or broadcasting stations which each broadcasts a commercial message are connected by a network, comprising:
first reception control means for controlling reception of first information transmitted from any of said second information processing apparatus of the broadcasting station or stations;
second reception control means for controlling reception of second information transmitted from any of said first information processing apparatus of the sponsors;
search means for searching, from within the second information transmitted from said first information processing apparatus of the sponsors and received under the control of said second reception control means, for the second information which coincides with a condition regarding the commercial message included in the first information received under the control of said first reception control means; and
transmission control means for controlling transmission of the first information to the first information processing apparatus of that one of the sponsors which has transmitted the second information searched out by said search means.

63. An information processing method for an information processing apparatus to which a plurality of first information processing apparatus of a plurality of sponsors which each wants a commercial message to be broadcast and one or more second information processing apparatus of a broadcasting station or broadcasting stations which each broadcasts a commercial message are connected by a network, comprising:
a first reception control step of controlling reception of first information transmitted from any of said second information processing apparatus of the broadcasting station or stations;
a second reception control step of controlling reception of second information transmitted from any of said first information processing apparatus of the sponsors;
a search step of searching, from within the second information transmitted from said first information processing apparatus of the sponsors and received under the control of the processing of the second reception control step, for the second information which coincides with a condition regarding the commercial message included in the first information received under the control of the processing of the first reception control step; and
a transmission control step of controlling transmission of the first information to the first information processing apparatus of that one of the sponsors which has transmitted the second information searched out by the processing of the search step.

64. A recording medium on which a computer-readable program for an information processing apparatus to which a plurality of first information processing apparatus of a plurality of sponsors which each wants a commercial message to be broadcast and one or more second information processing apparatus of a broadcasting station or broadcasting stations which each broadcasts a commercial message are connected by a network, comprising:
a first reception control step of controlling reception of first information transmitted from any of said second information processing apparatus of the broadcasting station or stations;
a second reception control step of controlling reception of second information transmitted from any of said first information processing apparatus of the sponsors;
a search step of searching, from within the second information transmitted from said first information processing apparatus of the sponsors and received under the control of the processing of the second reception control step, for the second information which coincides with a condition regarding the commercial message included in the first information received under the control of the processing of the first reception control step; and
a transmission control step of controlling transmission of the first information to the first information processing apparatus of that one of the sponsors which has transmitted the second information searched out by the processing of the search step.

65. A commercial message transaction system, comprising:
means for receiving a condition regarding a commercial message to be inserted into a television program produced by a broadcasting station through a network;
means for selecting, based on the condition received from the broadcasting station, one of a plurality of sponsors which has a condition satisfying for the condition of the broadcasting station; and
means for presenting the condition of the broadcasting station to the selected sponsor through the network to promote a transaction regarding the commercial message between the sponsor and the broadcasting station.

66. A commercial message transaction method, comprising the steps of:
receiving a condition regarding a commercial message to be inserted into a television program produced by a broadcasting station through a network;
selecting, based on the condition received from the broadcasting station, one of a plurality of sponsors which has a condition satisfying for the condition of the broadcasting station; and
presenting the condition of the broadcasting station to the selected sponsor through the network to promote a transaction regarding the commercial message between the sponsor and the broadcasting station.

67. A commercial message transaction system, comprising:
means for receiving a money amount condition regarding a commercial message to be inserted into a television program produced by a broadcasting station through a network;
means for selecting, based on the money amount condition received from the broadcasting station, one of a plurality of sponsors which can accept the money amount condition of the broadcasting station; and
means for presenting the condition of the broadcasting station to the selected sponsor through the network to promote a transaction regarding the commercial message between the sponsor and the broadcasting station.

68. A commercial message transaction method, comprising the steps of:
receiving a money amount condition regarding a commercial message to be inserted into a television program produced by a broadcasting station through a network;
selecting, based on the money amount condition received from the broadcasting station, one of a plurality of sponsors which can accept the money amount condition of the broadcasting station; and
presenting the condition of the broadcasting station to the selected sponsor through the network to promote a transaction regarding the commercial message between the sponsor and the broadcasting station.

69. A commercial message transaction system, comprising:
means for receiving a condition regarding a commercial message to be inserted into a television program produced by a broadcasting station through a network; and
means for presenting, based on the condition received from the broadcasting station, the condition of the broadcasting station to a plurality of sponsors which are expected to accept the condition of the broadcasting station through the network to promote a transaction regarding the commercial message between the sponsor and any of the broadcasting stations.

70. A commercial message transaction method, comprising the steps of:
receiving a condition regarding a commercial message to be inserted into a television program produced by a broadcasting station through a network; and
presenting, based on the condition received from the broadcasting station, the condition of the broadcasting station to a plurality of sponsors which are expected to accept the condition of the broadcasting station through the network to promote a transaction regarding the commercial message between the sponsor and any of the broadcasting stations.
